# EUROPÄISCHE PATENTSCHRIFT

(11) **EP 1 419 402 B1**
(45) Veröffentlichungstag und Bekanntmachung des Hinweises auf die Patenterteilung: **26.04.2006**
(21) Anmeldenummer: 02796260.4
(22) Anmeldetag: 21.08.2002
(51) Int. Cl.: G01S 17/93, G01S 7/48

(54) **VERFAHREN ZUR ERKENNUNG UND VERFOLGUNG VON OBJEKTEN**
METHOD FOR DETECTING AND TRACKING OBJECTS
PROCEDE DE RECONNAISSANCE ET DE POURSUITE D'OBJETS

(30) Priorität: 22.08.2001 DE 10141055; 28.09.2001 DE 10148068
(43) Veröffentlichungstag der Anmeldung: 19.05.2004
(73) Patentinhaber: IBEO Automobile Sensor GmbH, 22179 Hamburg (DE)
(72) Erfinder: LAGES, Ulrich, 21031 Hamburg (DE); DIETMAYER, Klaus, 89075 Ulm (DE); STRELLER, Daniel, 89075 Ulm (DE); WILLHOEFT, Volker, 22303 Hamburg (DE); SPARBERT, Jan, 71272 Renningen (DE)
(74) Vertreter: Manitz, Finsterwald & Partner GbR
(86) Internationale Anmeldenummer: PCT/EP2002/009362
(87) Internationale Veröffentlichungsnummer: WO 2003/019234

(56) Entgegenhaltungen:
- EP-A- 0 564 858
- EP-A- 0 973 121
- EP-A- 1 020 736
- US-A- 5 291 207
- US-A- 5 475 494
- US-A- 5 638 164
- US-A- 6 125 191
- VERLY J G ET AL: "MODEL-BASED AUTOMATIC TARGET RECOGNITION (ATR) SYSTEM FOR FORWARDLOOKING GROUNDBASED AND AIRBORNE IMAGING LASER RADARS (LADAR)" PROCEEDINGS OF THE IEEE, IEEE. NEW YORK, US, Bd. 84, Nr. 2, 1. Februar 1996 (1996-02-01), Seiten 126-163, XP000555861 ISSN: 0018-9219

## Beschreibung

Die vorliegende Erfindung betrifft ein Verfahren zur Erkennung und Verfolgung von Objekten auf der Basis von von einem Sensor zur Erfassung elektromagnetischer Strahlung, insbesondere einem Laserscanner, erfassten, tiefenaufgelösten, Bildpunkte enthaltenden Bildern von Gegenständen in einem Sichtbereich des Sensors, bei dem die Erkennung und Verfolgung unter Verwendung von den Objekten zugeordneten Modellen für die zeitliche Entwicklung von dynamischen Zustandsvariablen erfolgt, die jeweils einen zeitlich veränderlichen Zustand des Objekts beschreiben und dynamische Zustandsvariablen zur Bestimmung der Position des jeweiligen Objekts umfassen, und bei dem bei der Erkennung von Objekten eine Zuordnung von Bildpunkten eines aktuellen Bildes zu wenigstens einem Objekt erfolgt.

Verfahren der obengenannten Art sind grundsätzlich bekannt. Es ist möglich, sie bei der Überwachung des Bereichs vor einem Kraftfahrzeug einzusetzen. Hierbei werden insbesondere die Bewegungen anderer Kraftfahrzeuge überwacht. Bedingt durch unterschiedliche Ansichten ein und desselben Kraftfahrzeugs, beispielsweise bedingt durch eine veränderte Perspektive und/oder eine Verdeckung durch einen anderen Gegenstand, insbesondere ein anderes Fahrzeug, kann es sich als schwierig erweisen, im Rahmen eines solchen gattungsgemäßen Verfahrens in den Bildern ein solches Kraftfahrzeug wiederzuerkennen. Ein solches Verfahren wird in "Model Based Classification and Object Tracking in Traffic Scenes from Range Images", Klaus C. J. Dietmayer et al., Proceedings of IV 2001, IEEE Intelligent Vehicles Symposium, Mai 2001, Tokio, Japan, beschrieben.

Es ist Aufgabe der vorliegenden Erfindung, ein gattungsgemäßes Verfahren bereitzustellen, bei dem die Objekterkennung und -verfolgung auch bei dem Auftreten von unterschiedlichen Ansichten eines Gegenstands in aufeinanderfolgenden tiefenaufgelösten Bildern auf einfache und zuverlässige Weise möglich ist.

Die Aufgabe wird gelöst durch ein gattungsgemäßes Verfahren mit den Merkmalen des kennzeichnenden Teils des Anspruchs 1.

Ein gattungsgemäßes Verfahren zeichnet sich erfindungsgemäß dadurch aus, dass wenigstens einem Objekt als statische Eigenschaft eine Objektbox zugeordnet wird, die eine Ausdehnung des Objekts in der Bildebene darstellt, eine bestimmte Form und Größe aufweist, und hinsichtlich Form und Größe dem durch das Objekt dargestellten Gegenstand entspricht, und dass die dynamischen Zustandsvariablen zur Bestimmung der Position des Objekts die Koordinaten eines Bezugspunkts der Objektbox umfassen, über den die Position des Objekts bestimmbar ist.

Unter einem tiefenaufgelösten Bild eines Sensors wird eine Menge von bei einer Abtastung des Sichtbereichs des Sensors erfassten Bildpunkten verstanden, denen Punkte bzw. je nach Auflösung des Sensors auch Bereiche eines von dem Sensor erfassten Gegenstands entsprechen, wobei die Bildpunkte der Lage der zugehörigen Gegenstandspunkte entsprechende Koordinaten in wenigstens zwei Dimensionen umfassen, die nicht beide senkrecht zur Blickrichtung des Sensors stehen.

Die Bildpunkte können weiterhin Daten über weitere, insbesondere optische, Eigenschaften der Gegenstandspunkte, beispielsweise deren Reflektivität, enthalten. Diese Daten werden im folgenden als optische Eigenschaften der Bildpunkte bezeichnet.

Sensoren für elektromagnetische Strahlung zur Erfassung solcher tiefenaufgelöster Bilder sind grundsätzlich bekannt. Bei diesen kann es sich bevorzugt um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Rohdaten in tiefenaufgelöste Bilder aufweisen.

Vorzugsweise werden jedoch Laserscanner verwendet, die bei einer Abtastung einen Sichtbereich mit mindestens einem gepulsten Strahlungsbündel abtasten, das einen vorgegebenen Winkelbereich überstreicht und von einem Punkt bzw. Bereich eines Gegenstands, meist diffus, reflektierte Strahlungspulse des Strahlungsbündels detektieren. Dabei wird zur Entfernungsmessung die Laufzeit der ausgesandten, reflektierten und detektierten Strahlungspulse erfasst. Die so erfassten Rohdaten für einen Bildpunkt können dann als Koordinaten den Winkel, bei dem der Reflex erfasst wurde, und die aus der Laufzeit der Strahlungspulse bestimmte Entfernung des Gegenstandspunkts enthalten. Bei der Strahlung kann es sich insbesondere um sichtbares oder infrarotes Licht handeln.

Unter dynamischen Zustandsvariablen werden Variablen verstanden, die jeweils einen zeitlich veränderlichen Zustand des Objekts beschreiben, der wenigstens näherungsweise einem ebenso zeitlich veränderlichen Zustand des Gegenstands entspricht, der durch das Objekt dargestellt wird. Diese dynamischen Zustandsvariablen schließen daher keine Größen ein, die zwar in Rahmen des Verfahrens gegebenenfalls im Laufe der Zeit veränderbar sind, deren Veränderlichkeit aber nicht auf einer entsprechenden Veränderlichkeit des Gegenstands, sondern nur auf einer erfassungsbedingten Veränderung, insbesondere einer Veränderung der Darstellung des Gegenstands, beruht. Da eine Verfolgung von Objekten erfolgen soll, umfassen die dynamischen Zustandsvariablen insbesondere dynamische Zustandsvariablen zur Bestimmung der Position des jeweiligen Objekts.

Die Erkennung und Verfolgung von Objekten erfolgt dabei auf der Basis von Modellen, mit denen die zeitliche Entwicklung der dynamischen Zustandsvariablen wenigstens näherungsweise beschreibbar ist, wobei sich Art und Komplexität der Modelle u.a. nach dem Objekterkennungs- und -verfolgungsverfahren sowie der Art der typischerweise auftretenden, zu verfolgenden Gegenstände richten kann.

Zur Erkennung von Objekten in einem aktuellen Bild erfolgt dabei jeweils eine Zuordnung von Bildpunkten des Bildes zu wenigstens einem Objekt.

Erfindungsgemäß wird wenigstens einem Objekt als statische Eigenschaft eine Objektbox zugeordnet, die eine Ausdehnung des Objekts in der Bildebene darstellt und die eine bestimmte Form und Größe aufweist.

Die Objektbox stellt somit ein geometrisches Gebilde in der Ebene des tiefenaufgelösten Bildes mit bestimmter Form und Größe dar. Die Objektbox beschreibt also im wesentlichen den zeitlich nicht variablen bzw. als zeitlich nicht variabel angenommenen Umriß des durch das Objekt dargestellten Gegenstands in der Ebene des tiefenaufgelösten Bildes. Die Entsprechung kann dabei nur sehr grob sein, insbesondere kann die Form der Objektbox eine sehr weitgehende Vereinfachung der Form des Gegenstands darstellen, beispielsweise eine einfache geometrische Grundform.

Die Objektbox selbst stellt somit weder einen dynamischen Zustand noch eine dynamische Zustandsvariable in dem obengenannten Sinne dar.

Erfindungsgemäß umfassen weiterhin die dynamischen Zustandsvariablen die Koordinaten eines Bezugspunkts der Objektbox, über den die Position der Objektbox und damit des Objekts bestimmbar ist. Damit kann die Objektverfolgung über die dynamischen Zustandsvariablen für die Koordinaten des Bezugspunkts erfolgen. Bei dem Bezugspunkts der Objektbox kann es sich um einen beliebigen Punkt handeln, dessen Position relativ zu der Objektbox für die Dauer des Verfahrens festgelegt ist. Insbesondere kann als Bezugspunkt der geometrische Schwerpunkt der Objektbox vorgesehen sein.

Ein wesentlicher Vorteil dieses Verfahrens gegenüber anderen Verfahren liegt darin, dass die Position des Objekts in einem aktuellen Bild in weiten Grenzen unabhängig von der Anzahl der dem Objekt zugeordneten Bildpunkte bestimmbar ist, wobei vorausgesetzt wird, dass genügend Bildpunkte zur Festlegung der Position der Objektbox verfügbar sind. Wenn stattdessen zum Beispiel als Position des Objekts der geometrische Schwerpunkt der dem Objekt zugeordneten Bildpunkte verwendet werden würde, könnte es bei schnellen Veränderungen der Ansicht des Objekts zu großen Schwankungen bzw. Sprüngen in der gemessenen Position kommen, die zu vergleichsweise großen Schwankungen der vorhergesagten bzw. geschätzten Position des Objekts führen können.

Weiterbildungen und bevorzugte Ausführungsformen der Erfindung sind in der Beschreibung, den Ansprüchen und den Zeichnungen beschrieben.

Dadurch, dass zumindest bei Anwendung des erfindungsgemäßen Verfahrens im Bereich des Straßenverkehrs Gegenstände meist nicht kreisrund sind, sondern eine ausgezeichnete Richtung aufweisen, ist es zur genaueren Beschreibung der Lage des Objekts bzw. des durch das Objekt dargestellten Gegenstands bevorzugt, dass der Objektbox eine Achse zugeordnet ist, und dass die dynamischen Zustandsvariablen eine Orientierungsvariable umfassen, über die die Orientierung der Achse und damit der Objektbox zu einer vorgegebenen Referenzachse bestimmbar ist. Bei der Referenzachse kann es sich insbesondere um eine feste Achse in Bezug auf den verwendeten Sensor handeln. Hierdurch läßt sich auch die Orientierung eines Gegenstands weitgehend unabhängig von der Anzahl der dem Objekt in einem aktuellen Bild zugeordneten Bildpunkte gut verfolgen. Hierbei ist es insbesondere von großer Bedeutung, dass große Schwankungen bzw. Sprünge in der Lage des Bezugspunkts der Objektbox, insbesondere des Schwerpunkts, vermieden werden können, wenn die Orientierung der Objektbox bzw. des Objekts als Drehung um den Bezugspunkt dargestellt wird.

Bevorzugt wird zur Erkennung von Objekten für mindestens ein Objekt in Abhängigkeit von den prädizierten Werten der die Objektposition bestimmenden dynamischen Zustandsvariablen ein Suchbereich in dem aktuellen Bild definiert, in dem nach Bildpunkten für das Objekt gesucht wird und dessen Form und Größe von wenigstens einer Eigenschaft der Objektbox abhängt. Wenigstens für die die Position des Objekts beschreibenden dynamischen Zustandsvariablen werden dann unter Verwendung der Lage der diesem Objekt zugeordneten Bildpunkte in dem aktuellen Bild neue Werte bestimmt. Hierbei können insbesondere Werte der dynamischen Zustandsvariablen aus vorhergehenden Iterationen verwendet werden. Dies hat den Vorteil, dass bei großen Objekten bzw. Objektboxen der Suchbereich entsprechend der Objektbox größer gewählt werden kann, so dass der Suchbereich für den Bezugspunkt, der kleiner als die Ausdehnung der Objektbox sein kann, nicht unnötig künstlich erweitert werden muß.

Besonders bevorzugt kann hierbei ein Kalman-Filter verwendet werden, bei dem der Suchbereich dann über prädizierte Werte von Messgrößen und prädizierten Varianzen bzw. Kovarianzen der Messgrößen bestimmt wird, wobei die Messgrößen die die Position und gegebenenfalls die Orientierung der Objektbox bestimmenden dynamischen Zustandsvariablen umfassen oder von diesen eineindeutig abhängen.

Insbesondere kann sich der Suchbereich dadurch ergeben, dass zunächst ein Suchbereich für den Bezugspunkt, vorzugsweise den Schwerpunkt der Objektbox bzw. des Objekts, bestimmt und dann der Bezugspunkt in der Objektbox mit der Objektbox entlang des Randes des Suchbereichs für den Bezugspunkt geführt wird, wobei der Suchbereich für den Bezugspunkt zusammen mit der von der Objektbox überstrichenen Fläche den Suchbereich bestimmt. Hierdurch ergibt sich eine sehr günstige Form des Suchbereichs, da beispielsweise Segmente, die in Randbereichen der Objektbox und ganz oder teilweise außerhalb des Suchbereichs für den Bezugspunkt liegen, auch noch erfasst werden können. Gleichzeitig kann der Algorithmus zur Bestimmung des Suchbereichs des Bezugspunktes unabhängig von der Form und Größe der Objektbox gestaltet werden, so dass sich ein besonders geradliniges Verfahren ergibt.

Bevorzugt wird weiterhin eine Weiterbildung des erfindungsgemäßen Verfahrens, bei der zur Erkennung von Objekten aus den Bildpunkten des aktuellen Bildes Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen, dass für mindestens ein Objekt in Abhängigkeit von den prädizierten Werten in der die Objekt- bzw. Objektboxposition bestimmenden Zustandsvariablen ein Suchbereich in dem aktuellen Bild definiert wird, in dem nach dem Objekt zuzuordnenden Bildpunkten für das Objekt gesucht wird, und die Position und f oder Orientierung der Objektbox so bestimmt wird, dass wenigstens ein Segment, das in dem Suchbereich liegt, auch in der Objektbox liegt. Bei diesem Segmentierungskriterium kann es sich hier und im folgenden insbesondere um ein Kriterium für einen maximal zulässigen Abstand und/oder einen maximal zulässigen Unterschied einer optischen Eigenschaft, insbesondere der Reflektivität, handeln. Weiterhin kann bei Verwendung eines Laserscanners auch eine aus Pulsbreiten und/oder höhen bestimmte Neigung einer Fläche verwendet werden.

Im Gegensatz zu Verfahren, bei denen beispielsweise zur Bestimmung der Position des Objekts um ein Segment im Suchbereich ein kleinstes begrenzendes Rechteck gelegt wird, aus dessen Position die Position des Objekts bestimmt wird, wird in einer Variante der Erfindung die Objektbox so positioniert, dass ein Segment im Suchbereich in der Objektbox liegt. Insbesondere können die Position und/oder Orientierung der Objektbox so bestimmt werden, dass gegebenenfalls mehrere Segmente in dem Suchbereich auch in der Objektbox liegen. Hierdurch kann insbesondere die Zuordnung von mehreren Segmenten zu einem Objekt erleichtert werden.

Dies ist insbesondere in dem Fall wichtig, dass ein Teil einer im Prinzip sichtbaren Kontur eines Objekts bzw. von dem Objekt dargestellten Gegenstands durch ein anderes Objekt beziehungsweise einen anderen Gegenstand verdeckt wird, wodurch zwei voneinander getrennte Segmente entstehen können. Ohne die Verwendung einer erfindungsgemäßen Objektbox wäre dann ein vergleichsweise aufwendiges Verfahren notwendig, um eine korrekte Zuordnung der Segmente zu einem Objekt zu erreichen.

Da Bildpunkte eines tiefenaufgelösten Bildes Gegenstandspunkten auf dem Umfang bzw. Umriß eines Gegenstands entsprechen, wird bevorzugt die Position und/oder Orientierung der Objektbox so bestimmt, dass ein jeweils dem Objekt zuzuordnendes Segment entlang wenigstens eines Teils des Randes der Objektbox angeordnet ist. Hierdurch kann in den meisten Fällen erreicht werden, dass tatsächlich nur solche Segmente einer Objektbox zugeordnet werden, die auch tatsächlich einem möglichen Umriß des Gegenstands entsprechen.

Besonders bevorzugt ist es dabei, dass die Position und/oder Orientierung der Objektbox in Abhängigkeit der Abstände zwischen Bildpunkten von zugleich in der Objektbox und in dem Suchbereich liegenden Segmenten und dem Rand der Objektbox bestimmt wird. Bei dem Abstand kann es sich insbesondere um die Entfernung des Bildpunktes von dem Rand der Objektbox entlang einer Senkrechten auf eine Tangente an den Rand der Objektbox handeln.

Vorzugsweise kann die Position und/oder Orientierung der Objektbox durch Minimierung der Abstände zwischen Bildpunkten von in der Objektbox und in dem Suchbereich liegenden Segmenten und dem Rand der Objektbox minimiert werden. Dabei können, beispielsweise in Abhängigkeit von der Richtung, Entfernung oder Güte eines Bildpunktes, die Abstände unterschiedlich gewichtet werden.

Die Zuordnung von Segmenten zu einer Objektbox bzw. dem entsprechenden Objekt kann dabei insbesondere in Abhängigkeit von dem mittleren Abstand der Bildpunkte eines Segments von dem Rand der Objektbox erfolgen. Insbesondere kann vorgesehen sein, dass eine Zuordnung nur erfolgt, wenn der mittlere Abstand einen vorgegebenen Schwellwert überschreitet.

Weiterhin ist es besonders bevorzugt, dass der zur Zuordnung verwendete mittlere Abstand auf eine Ausdehnung der Objektbox, bei einem Rechteck beispielsweise der Länge oder Breite, bezogen wird. Hierdurch werden Unterschiede in der Größe der Objektboxen, beispielsweise für Personen oder Lastkraftwagen, berücksichtigt, so dass der Schwellwert für alle Objekte gleich gewählt werden kann.

Es ist darüber hinaus bevorzugt, dass mindestens eine Objektbox einen innerhalb der Objektbox entlang ihres Umfangs verlaufenden Randstreifen vorgegebener Breite aufweist, und zur Zuordnung von Segmenten zu Objekten die Objektbox so positioniert wird, dass die Anzahl der Bildpunkte in dem Randstreifen maximiert wird.

Um die Zuordnung von Objektboxen zu Objekten zu vereinfachen, ist es bevorzugt, dass Objekten zuzuordnende Objektklassen definiert werden, für die jeweils eine Objektbox mit einer objektklassenspezifischen Form und Größe definiert ist, und dass mindestens einem Objekt bei oder nach seiner Bildung eine Objektklasse und eine für die Objektklasse spezifische Objektbox zugeordnet wird. Hierdurch kann ausgenutzt werden, dass bei Erkennung einer für eine bestimmte Objektklasse typischen Dimension in einer bestimmten Richtung direkt die Größe der Objektbox in einer anderen Dimension festgelegt sein kann.

Vorzugsweise kann die Objektklasse dadurch bestimmt sein, dass sie Gegenständen mit bestimmten geometrischen Eigenschaften, also insbesondere bestimmten Formen und Größen, entspricht. Dabei können die Formen nur sehr abstrahiert und damit einfach vorgegeben sein und die Größen innerhalb eines vorgegebenen Wertebereichs liegen. Bei einer Verwendung zur Überwachung eines Bereichs vor einem Fahrzeug kann eine solche Klassifizierung nach geometrischen Kriterien insbesondere auch eine entsprechende Zuordnung von objektklassenspezifischen Modellen erlauben, die eine verbesserte Beschreibung der Objekte der Objektklasse erlaubt.

Daher ist es besonders bevorzugt, dass Objekten zuzuordnende Objektklassen definiert werden, die Gegenständen mit bestimmten Formen und Größen entsprechen, dass Form und/oder Größe der Objektbox wenigstens durch mindestens einen statischen Zustandsparameter entsprechend den Formen und Größen der der Objektklasse entsprechenden Gegenstände parametrisierbar ist, und dass mindestens einem Objekt bei oder nach seiner Bildung eine Objektklasse und eine Objektbox entsprechend der objektklassenspezifischen Form und eines vorgegebenen Anfangswertes des statischen Zustandsparameters zugeordnet wird.

Die Objektklassen können dabei jeweils vorzugsweise weiterhin der Definition der zur Objektverfolgung verwendeten Modelle dienen, wie es in der am gleichen Tag wie die vorliegende Anmeldung eingereichten deutschen Patentanmeldung der Anmelderin mit dem anwaltlichen Aktenzeichen S7880 und dem Titel "Verfahren zur Erkennung und Verfolgung von Objekten" beschrieben ist, deren Inhalt hiermit durch Bezugnahme in die Beschreibung aufgenommen wird.

Dabei ist es bevorzugt, dass vor der Objektbildung Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen, dass ein Objekt auf der Basis wenigstens eines Segments erstellt wird, und dass dem Objekt eine Objektklasse und eine der Objektklasse entsprechende Objektbox zugeordnet wird, die das Segment vollständig aufnimmt.

Durch die Verwendung von Segmenten wird sowohl die Auswahl einer geeigneten Objektklasse wie auch die Bestimmung der Position und gegebenenfalls Orientierung der Objektbox erleichtert. Die Bestimmung der Position und gegebenenfalls Orientierung kann dabei mit den oben beschriebenen Weiterbildungen des erfindungsgemäßen Verfahrens erfolgen.

Bei Verwendung von Objektklassen, denen Objektboxen mit statischen Zustandsparametern zugeordnet sind, ist es bevorzugt, als Anfangswert des statischen Zustandsparameters oder mehrerer, die Objektbox parametrisierender statischer Zustandsparameter einen Wert aus dem zulässigen Bereich bzw. Werte aus entsprechenden zulässigen Bereichen zu wählen, für den bzw. die die Ausdehnung der Objektbox maximal ist. Hierdurch ergibt sich zum einen ein besonders großer Suchbereich, wenn in die Bestimmung des Suchbereichs die Form und/oder Größe der Objektbox eingeht, und zum anderen kann gewährleistet werden, dass bisher, z. B. wegen einer Verdeckung durch einen zwischen Sensor und Gegenstand liegenden weiteren Gegenstand, nicht erkannte Bereiche des Gegenstands trotzdem dem Objekt zugeordnet werden können, da die Bereiche noch in die Objektbox fallen.

Bei Verwendung von Objektklassen, denen Objektboxen mit statischen Zustandsparametern zugeordnet sind, ist es bei einer anderen Weiterbildung bevorzugt, dass für jede Objektklasse ein Anfangswert für einen die Objektbox parametrisierenden, statischen Zustandsparameter vorgegeben ist, und dass der Anfangswert als Wert des Zustandsparameters für ein neu erstelltes Objekt verwendet wird, wenn das Segment kleiner als die durch den Anfangswert bestimmte Objektbox ist, und dass der Wert eines die Objektbox parametrisierenden Zustandsparameters für das neu erstellte Objekt sonst so bestimmt wird, dass das Segment von der Objektbox möglichst eng umfasst wird.

Hierdurch ergibt sich eine Objektbox mit möglichst kleinen Ausmaßen. Der Anfangswert kann insbesondere so bestimmt sein, dass die Ausdehnung der entsprechenden Objektbox der häufigsten oder mittleren Ausdehnung von der Objektklasse entsprechenden Gegenständen entspricht.

Je nach Initialisierung der Objektbox kann sich diese im Verlauf des Verfahrens als zu klein oder zu groß herausstellen. Es ist daher bevorzugt, dass Form und/oder Größe der Objektbox wenigstens durch mindestens einen statischen Zustandsparameter parametrisierbar ist, und dass aus den Bildpunkten des Bildes Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen. Nach einer Zuordnung von Segmenten, und damit den den Segmenten zugeordneten Bildpunkten, zu Objekten wird dann weiter überprüft, ob die Ausdehnung des Gegenstands von der entsprechenden Ausdehnung der Objektbox abweicht. Bei Erkennung einer Abweichung der aus wenigstens einem Segment ermittelten Ausdehnung des Objekts von der Ausdehnung der Objektbox wird die Objektbox adaptiert.

Die Adaption erfolgt dabei durch Änderung des Wertes wenigstens eines entsprechenden statischen Zustandsparameters. Eine Erkennung einer Abweichung der Ausdehnung des Gegenstands von der entsprechenden Ausdehnung der Objektbox kann dabei bevorzugt dadurch erfolgen, dass Begrenzungen des Gegenstands sicher erfasst werden. Dies kann durch Erfassung von Ecken erfolgen oder, nach Ausschluß einer teilweisen Verdeckung der Enden der im Bild sichtbaren Kontur des Gegenstands durch einen zwischen Sensor und Gegenstand liegenden weiteren Gegenstand, über die erfasste Größe des Gegenstands.

Dabei ist es besonders bevorzugt, dass bei dem Auftreten eines Segments, das auch nach beliebigen Translationen und/oder Drehung in der Objektbox nur teilweise in der Objektbox liegt, ein die Objektbox parametrisierender statischer Zustandsparameter so adaptiert wird, dass das Segment vollständig in der adaptierten Objektbox liegt, wobei vorzugsweise die Zuordnung nur erfolgt, wenn die Objektbox für das Objekt wenigstens einer vorgegebenen Konsistenzbedingung genügt. Diese Plausibilitätsprüfungen spielen besonders dann eine Rolle, wenn die Größe der Objektbox zu Beginn nicht maximal gewählt war. Denn in diesem Fall ist es möglich, dass Segmente auftauchen, die zwar teilweise in der Objektbox liegen, aber dem Objekt nicht zuzuordnen sind.

Besonders bevorzugt werden dabei Objekten zuzuordnende Objektklassen definiert, für die jeweils eine Objektbox mit einer objektklassenspezifischer Form und ein Bereich zulässiger Werte für wenigstens einen die Objektbox parametrisierenden statischen Zustandsparameter definiert sind. Weiter ist für wenigstens eine Objektklasse wenigstens eine Konsistenzbedingung in bezug auf einen die Ausdehnung der Objektbox parametrisierenden statischen Zustandsparameter vorgesehen. Insbesondere in dem Falle, dass die Objektklassen über minimale und maximale Ausdehnungen von Gegenständen definiert sind, denen die Objekte der Objektklasse entsprechen, können diese minimalen und maximalen Ausdehnungen zur Konsistenzprüfung verwendet werden. So sollte beispielsweise ein Segment mit einer Länge von 10m nicht zu einer Adaption einer Objektbox für ein Objekt der Objektklasse Personenkraftwagen führen. Um solche Probleme zu vermeiden, wird bevorzugt die Konsistenzbedingung geprüft.

Insbesondere im Hinblick auf Anwendungen im Straßenverkehr ist es bevorzugt, dass die Form der Objektbox ein Rechteck ist, da zumindest die meisten Fahrzeuge und auch Personen wenigstens in grober Näherung durch Rechtecke darstellbar sind. Darüber hinaus sind Rechtecke bei den Operationen des Verfahrens besonders einfach zu handhaben.

Besonders bevorzugt kann dabei die Objektbox durch einen statischen Zustandsparameter für dessen Länge und einen für dessen Breite parametrisiert sein.

Bei Verwendung von Objektklassen können die Objektklassen insbesondere durch Wertebereiche für die Breite und Länge der Gegenstände definiert sein, die durch Objekte der Objektklasse dargestellt werden sollen. Die entsprechenden Objektboxen weisen dann als Form ein Rechteck auf, dessen Größe durch die statischen Zustandsparameter für die Breite und Länge parametrisiert ist, wobei die Werte der statischen Zustandsparameter in Wertebereichen liegen müssen, die denen der Objektklassendefinition entsprechen.

Da die Ausdehnung der Objektboxen während des Verfahrens bis auf eine mögliche Adaption fest ist, kann einfach überprüft werden, wie gut eine Zuordnung von Bildpunkten bzw. Segmenten zu dem Objekt ist. Dazu ist es bevorzugt, dass zur Erkennung von Objekten Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen, und dass einer Segment-Objekt-Zuordnung für wenigstens ein Objekt bei der Erkennung eine Güte zugeordnet wird, die in Abhängigkeit von der maximal möglichen Anzahl von Bildpunkten in der Objektbox und der Anzahl der tatsächlich in der Objektbox gefundenen Bildpunkte bestimmt wird. Die maximal mögliche Anzahl von Bildpunkten kann dabei auf der Basis der Position der Objektbox relativ zu dem Sensor und dem Auflösungsvermögen des Sensors bei der gegebenen Objektboxposition ermittelt oder theoretisch durch Variation über alle möglichen Lagen der Objektbox zu dem Sensor bestimmt werden.

Analoges gilt, wenn die Zuordnung von Bildpunkten zur Objekten ohne Segmente erfolgt.

Anhand dieser Güte kann, wenn noch keine Adaption erfolgt ist und die Objektbox zu Beginn die maximale Ausdehnung hatte, nach einer Prüfung auf mögliche Verdeckungen festgestellt werden, ob das Objekt kleiner als die Objektbox ist. Darüber hinaus kann insbesondere auch einfach eine Verdeckung des dem Objekt entsprechenden Gegenstands durch einen anderen, zwischen diesem und dem Sensor liegenden Gegenstand erkannt werden.

Es ist darüber hinaus bevorzugt, dass mindestens eine Objektbox einen innerhalb der Objektbox entlang ihres Umfangs verlaufenden Randstreifen vorgegebener Breite aufweist, und eine Güte der Zuordnung von Bildpunkten in Abhängigkeit von der in dem Randstreifen liegenden Bildpunkte und der Gesamtzahl der in der in der Objektbox liegenden Bildpunkte bestimmt wird. Insbesondere kann hierzu das Verhältnis der beiden Werte verwendet werden. Auf diese Weise läßt sich sehr schnell eine Güte bestimmen, die angibt, wie genau die Bildpunkte, die der Kontur des Gegenstands entsprechen sollten, entlang der Kontur der Objektbox angeordnet sind. Besonders bevorzugt kann auch hier eine Segmentierung erfolgen bzw. verwendet werden, wobei sich eine Güte der Segment-Objekt-Zuordnung ergibt.

Weiterhin ist es bevorzugt, dass vor der Ermittlung der Güte eine Verdeckungserkennung durchgeführt wird, bei der ermittelt wird, ob ein Teil des Objekts bzw. des durch dieses dargestellten Gegenstands aus der Sichtrichtung des Sensors durch ein anderes Objekt bzw. einen anderen durch dieses andere Objekt dargestellten Gegenstand verdeckt wird, und dass bei Erkennung einer Verdeckung die durch die Verdeckung fehlenden Bildpunkte bei der Berechnung der Güte berücksichtigt werden. Dies kann entweder dadurch geschehen, dass die entsprechenden Bildpunkte rekonstruiert und in die Berechnung einbezogen werden, oder dadurch, dass während der Bestimmung der Güte die maximale Zahl der Bildpunkte um die Anzahl der verdeckten Bildpunkte reduziert wird. Hiermit läßt sich auch bei einer Verdeckung leicht erkennen, ob die Ausdehnung eines durch das Objekt dargestellten Gegenstands der Ausdehnung der Objektbox entspricht oder nicht.

Zur Bestimmung einer Güte ist es weiterhin bevorzugt, dass zur Erkennung von Objekten Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen, und dass einer Segment-Objekt-Zuordnung für wenigstens ein Objekt bei einer Erkennung eine Güte zugeordnet wird, die in Abhängigkeit von den minimalen Abständen zwischen in der Objektbox liegenden Bildpunkten und dem Rand der Objektbox und von der Anzahl der in der Objektbox liegenden Punkte bestimmt wird. Besonders bevorzugt kann hierbei der normierte mittlere einfache oder quadratische Abstand zur Bestimmung eines Gütewertes benutzt werden. Hierdurch kann insbesondere leicht festgestellt werden, inwieweit die einem Objekt zugeordneten Bildpunkte auch auf dem Rand der Objektbox bzw. in dessen Nähe liegen. Hierdurch lassen sich beispielsweise tatsächlich im wesentlichen rechteckige Gegenstände wie z. B. Autos von anderen Gegenständen wie z. B. Büschen unterscheiden, da letztere Segmente mit Bildpunkten aufweisen, die unter Umständen auch in großer Zahl innerhalb der Objektbox liegen.

Analoges gilt, wenn die Zuordnung von Bildpunkten zur Objekten ohne Segmente erfolgt.

Besonders bevorzugt können die Abstände auf eine Ausdehnung der Objektbox bezogen sein, so dass sich vergleichbare Gütewerte sowohl für kleine wie auch große Objektboxen ergeben.

Besonders bevorzugt kann dem Objekt als Eigenschaft eine Objektgüte zugeordnet werden, die in Abhängigkeit von der Güte wenigstens der letzten Segment-Objekt-Zuordnung bestimmt wird. Anhand dieser Objekteigenschaft kann eine nachfolgende Applikationen die Zuverlässigkeit einer Objektbestimmung erkennen. Vorzugsweise kann die Objektgüte als gleitender, gegebenenfalls gewichteter Mittelwert der für mehrere Segment-Objekt-Zuordnungen bestimmten Güten ermittelt werden.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Gegenstand der Erfindung ist auch ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Weiterer Gegenstand der Erfindung ist ein Verfahren zur Erkennung und Verfolgung von Gegenständen in einem Sichtbereich eines Sensors zur Erfassung elektromagnetischer Strahlung, vorzugsweise eines optoelektronischen Sensors, insbesondere eines Laserscanners, bei dem mit dem Sensor zeitlich aufeinanderfolgend tiefenaufgelöste Bilder wenigstens eines Teils seines Sichtbereichs erfasst werden, und bei dem die erfassten Bilder mit dem erfindungsgemäßen Verfahren zur Erkennung und Verfolgung von Objekten verarbeitet werden.

Schließlich ist Gegenstand der Erfindung eine Vorrichtung zur Erkennung und Verfolgung von Objekten mit mindestens einem zur Erfassung tiefenaufgelöster Bilder eines Überwachungsbereichs ausgebildeten Sensor zur Erfassung elektromagnetischer Strahlung, vorzugsweise einem optoelektronischen Sensor, insbesondere einem Laserscanner, und mit einer Datenverarbeitungseinrichtung, die zur Durchführung des erfindungsgemäßen Verfahrens ausgebildet ist.

Eine bevorzugte Ausführungsform der Erfindung wird im folgenden beispielhaft anhand der Zeichnungen erläutert. Es zeigen:
Fig. 1 eine schematische Draufsicht auf eine Szene mit einem Fahrzeug, an dem ein Laserscanner angebracht ist, und zwei Fahrzeugen im Sichtbereich des Laserscanners,
Fig. 2 ein Ablaufdiagramm eines Verfahrens zur Erkennung und Verfolgung von Objekten nach einer bevorzugten Ausführungsform der Erfindung,
Fig. 3 die Szene in Fig. 1 zu einem späteren Zeitpunkt,
Fig. 4 die Szene in Fig. 3 zu einem späteren Zeitpunkt,
Fig. 5 eine schematische Draufsicht auf eine Szene mit einem Fahrzeug, an dem ein Laserscanner angebracht ist, und zwei Fahrzeugen im Sichtbereich des Laserscanners, und
Fig. 6 die Szene in Fig. 5 zu einem späteren Zeitpunkt.

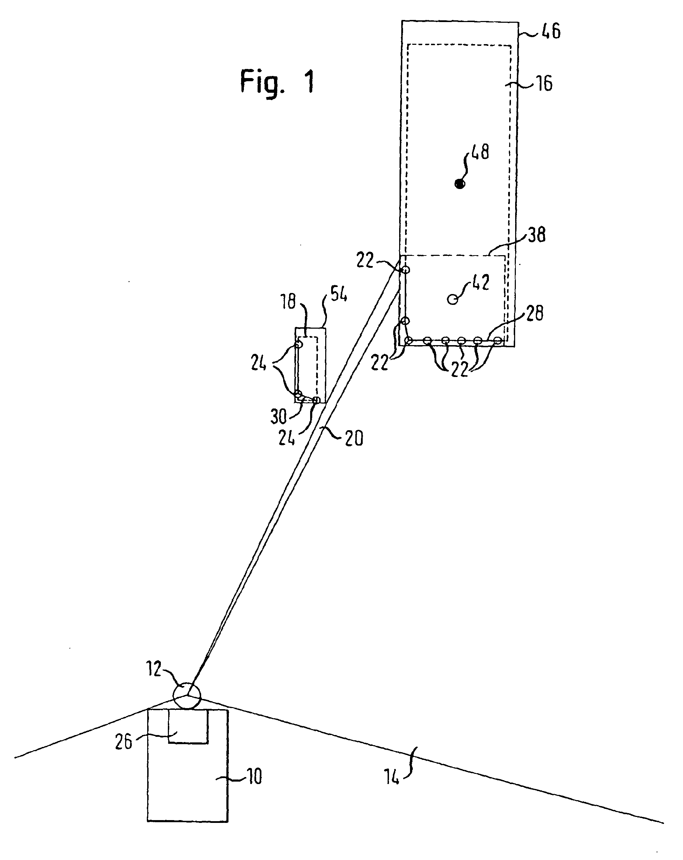

In Fig. 1 ist an der Frontseite eines Fahrzeugs 10 ein Laserscanner 12 angeordnet, dessen Sichtbereich 14 den in Fahrtrichtung vor dem Fahrzeug liegenden Bereich umfasst. Im Sichtbereich 14 befinden sich ein Lastkraftwagen 16 und ein Zweirad 18, die durch die Rechtecke mit eng gepunkteten Linien dargestellt sind.

Der Laserscanner 12 tastet seinen Sichtbereich 14 mit einem umlaufenden, gepulsten Strahlungsbündel 20 ab und erfasst die Position von Gegenstandspunkten, beispielsweise den Gegenstandspunkten 22 und 24 auf dem Lastkraftwagen 16 bzw. dem Zweirad 18, an denen ein Puls des Strahlungsbündels reflektiert wurde, anhand des Winkels, bei dem der Strahlungspuls ausgesandt bzw. empfangen wurde, und dem Abstand zum Laserscanner 12, der sich aus der Laufzeit des Strahlungspulses von der Abstrahlung bis zum Empfang nach der Reflexion ergibt. Bei einer Abtastung des Sichtbereichs 14 wird somit ein tiefenaufgelöstes Bild erfasst, das die bei der Abtastung erfassten Bildpunkte umfasst, die zumindest die Koordinaten der Gegenstandspunkte 22 und 24 enthalten, an denen das Strahlungsbündel 18 reflektiert wurde. Die Bildpunkte werden in den Figuren durch die Gegenstandspunkte dargestellt. Die Aktualisierung der vollständigen Bilder erfolgt in einem zeitlichen Abstand T.

Die von dem Laserscanner 12 erfassten Bilder werden, gegebenenfalls nach einer Korrektur der Koordinaten der Bildpunkte, an eine Datenverarbeitungseinrichtung 26 in dem Fahrzeug 10 ausgegeben, in der eine Weiterverarbeitung der Bilder stattfindet. Die Datenverarbeitungseinrichtung 26 weist dazu, in den Figuren nicht gezeigt, einen Prozessor und einen Speicher sowie eine Schnittstelle zur Übertragung der Daten von dem Laserscanner auf. Weiterhin ist eine Schnittstelle zur Ausgabe von Daten an andere Datenverarbeitungseinrichtungen in dem Fahrzeug 10 vorgesehen, die jedoch ebenfalls in den Figuren nicht gezeigt sind.

Zur Erkennung und Verfolgung von Objekten wird ein Objekterkennungs- und -verfolgungsverfahren nach einer bevorzugten Ausführungsform der Erfindung in der Datenverarbeitungseinrichtung 26 ausgeführt, in der dazu ein entsprechendes Programm gespeichert ist und ausgeführt wird.

Zur Objekterkennung und -verfolgung wird ein Kalman-Filter verwendet, wobei als dynamische Zustandsvariablen in diesem Ausführungsbeispiel die Schwerpunktskoordinaten des Objekts verwendet werden. Diese Schwerpunktskoordinaten werden gleichzeitig auch als Messgrößen bei der Kalman-Filterung verwendet.

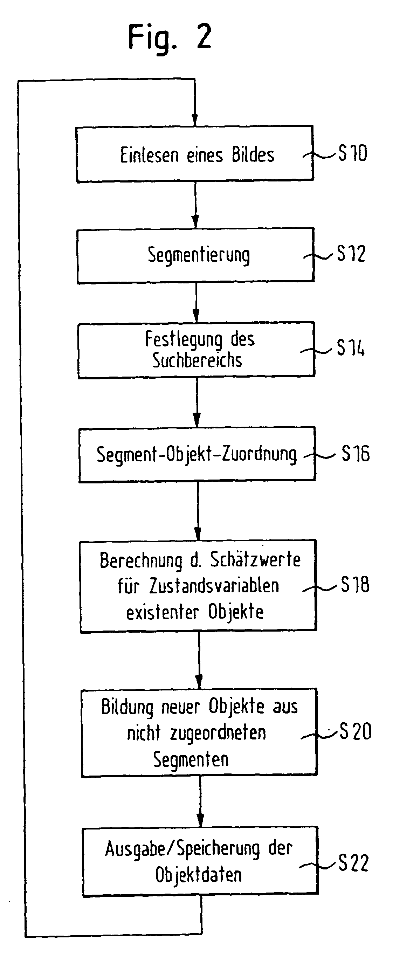

Der Ablauf des Verfahrens ist in groben Zügen in dem Ablaufdiagramm in Fig. 2 gezeigt.

Nach dem Erfassen eines neuen tiefenaufgelösten Bildes durch den Laserscanner 12 wird in Schritt S10 das Bild eingelesen.

Gegebenenfalls nach einer Korrektur der in dem Bild enthaltenen Daten werden Bildpunkte des Bildes in Schritt S 12 zu Segmenten zusammengefaßt. Dabei gehört ein Bildpunkt zu einem Segment, wenn er zu mindestens einem anderen Bildpunkt des Segments einen Abstand hat, der kleiner ist als ein vorgegebener Höchstabstand. Die Bildung von Segmenten und insbesondere die Wahl von Abstandskriterien kann dabei unter Verwendung eines euklidischen Abstandes, bei dem gegebenenfalls die Differenzen zwischen den Koordinaten des Bildpunktes in Richtung der Fahrtrichtung geringer gewichtet werden als quer zur Fahrtrichtung, oder zweier Abstände jeweils in einer der Koordinatenrichtungen eines gegebenen Koordinatensystems, beispielsweise eines kartesischen Koordinatensystems oder eines Polarkoordinatensystems, erfolgen.

Die eigentliche Erkennung von Objekten erfolgt in den Schritten S14 und S16.

In Schritt S 14 wird in Abhängigkeit von prädizierten Werten der dynamischen Zustandsvariablen, das heißt, bei Verwendung des Kalman-Filters genauer, von prädizierten Werten der entsprechenden Messgrößen und beispielsweise prädizierten Varianzen und Kovarianzen der Messgrößen, ein Suchbereich für jedes Objekt festgelegt, in dem nach Bildpunkten bzw. Segmenten gesucht wird, die dem zu erkennenden Objekt zuzuordnen sind.

In Schritt S16 erfolgt dann eine Zuordnung von Segmenten und Objekten. Aus dieser Zuordnung ergeben sich neue Werte der Messgrößen und insbesondere neue Werte der Koordinaten des Schwerpunktes des Objekts.

In Schritt S 18 werden dann in Abhängigkeit von vorhergehenden Werten der dynamischen Zustandsvariablen, den neuen Werte der Messgrößen und weiteren Größen, wie beispielsweise Varianzen und Kovarianzen der dynamischen Zustandsvariablen und der Messgrößen, neue Schätzwerte für die dynamischen Zustandsvariablen der erkannten, existenten Objekte berechnet.

Konnten bei der Objekterkennung nicht allen Segmenten Objekte zugeordnet werden, werden in Schritt S20 aus nicht zugeordneten Segmenten neue Objekte gebildet. Die Eigenschaften dieser Objekte und insbesondere Anfangswerte ihrer dynamischen Zustandsvariablen ergeben sich dabei wenigstens teilweise aus den Eigenschaften der den Objekten zugrundeliegenden Segmente.

Die die Objekte betreffenden Daten, also insbesondere deren Anzahl und Schwerpunktskoordinaten, werden dann in Schritt S22, soweit nicht bereits geschehen, berechnet und gespeichert bzw. an nachfolgende Applikationen ausgegeben.

Daraufhin wird das Verfahren nach der Erfassung eines neuen tiefenaufgelösten Bildes durch den Laserscanner 12 mit Schritt S10 fortgesetzt.

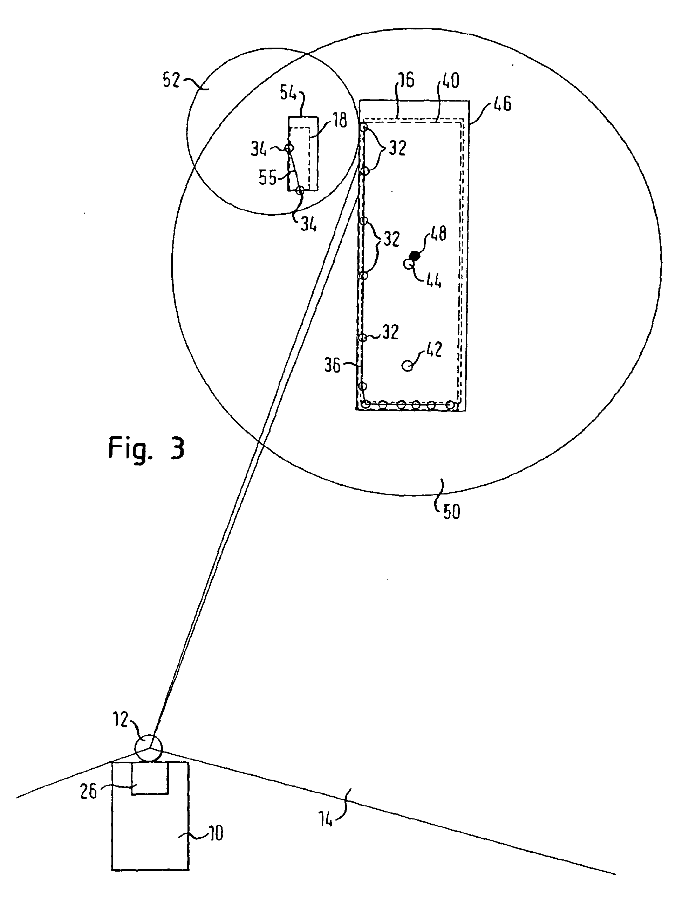

In Fig. 1 und Fig. 3 ist unter anderen das Ergebnis einer Objekterkennung und -verfolgung dargestellt, bei der der Schwerpunkt des Objekts durch den Schwerpunkt des dem Objekt zugeordneten Segments gebildet wird.

In Fig. 1 wird ein Teil des Lastkraftwagens 16 durch das Zweirad 18 verdeckt, so dass sich nur wenige Bildpunkte entlang der Längsseite des Lastlastkraftwagens 16 ergeben.

Als Ergebnis der Segmentierung in Schritt S12 ergeben sich in Fig. 1 die Segmente 28 und 30, die jeweils durch die mit durchgezogenen Linien miteinander verbundenen, ihnen zugeordneten Bildpunkte 22 bzw. 24 dargestellt sind.

In Fig. 3, in der die gleichen Fahrzeuge zu einem späteren Zeitpunkt dargestellt sind, befindet sich das Zweirad 18 nun soweit vor dem Lastkraftwagen 16, dass dessen gesamte Längsseite für den Laserscanner 12 sichtbar ist, so dass sich nun eine wesentlich größere Anzahl von Gegenstands- bzw. Bildpunkten 32 für den Lastkraftwagen 16 ergibt, während nur zwei Bildpunkte 34 für das Zweirad erfasst werden. Aus den Bildpunkten 32 ergibt sich nun ein wesentlich größeres Segment 36, das dem Lastwagen 16 zuzuordnen ist.

Bestimmt man nun den Schwerpunkt des Objekts durch den Schwerpunkt eines begrenzenden Rechtecks 38 bzw. 40, das das Segment 28 bzw. 36 möglichst eng umschließt, ergeben sich als Positionen des Schwerpunktes die durch die Punkte 42 bzw. 44 gekennzeichneten Lagen. Obwohl sich der Lastkraftwagen 16 in dem Bild in Fig. 3 verglichen mit dem Bild in Fig. 1 praktisch nicht gegenüber dem Fahrzeug 10 bewegt hat, ergibt sich, wie in Fig. 3 dargestellt, ein vergleichsweise großer Sprung in den gemessenen Koordinaten des Objekts, der nicht der Realität entspricht.

Bei dem erfindungsgemäßen Verfahren ist es daher vorgesehen, Objekten Objektboxen zuzuordnen, die die Ausdehnung des Objekts darstellen. Hierzu sind in dem Beispiel drei Objektklassen vorgesehen, die sich durch die Abmessungen der den Objekten in den Objektklassen entsprechenden Gegenstände auszeichnen.

So ist eine Objektklasse für Zweiräder vorgesehen, die Gegenständen entspricht, die, dargestellt durch ein Rechteck, einer Länge zwischen 1,5 m und 2,5 m und eine Breite zwischen 0,3 m und 1,2 m aufweisen. Weiterhin ist eine Objektklasse für Personenkraftwagen vorgesehen, die Gegenständen entspricht, die, dargestellt durch ein Rechteck, eine Länge zwischen 3 m und 6 m und eine Breite zwischen 1,5 m und 2 m aufweisen. Schließlich ist eine Objektklasse für Lastkraftwagen vorgesehen, die Gegenständen entspricht, die, dargestellt durch ein Rechteck, eine Länge zwischen 6 m und 15 m und eine Breite zwischen 2 m und 3 m aufweisen.

Objekten dieser Objektklassen sind jeweils Objektboxen zugeordnet, die ebenfalls rechteckig sind und deren Ausdehnung durch statische Zustandsparameter für die Breite und Länge der Rechtecke parametrisierbar sind. Bei Zuordnung der Objektboxen zu den Objekten sind die Werte der statischen Zustandsparameter so gewählt sind, dass die Ausdehnung der Objektboxen maximal ist. Das bedeutet beispielsweise, dass die in Fig. 1 gezeigt Objektbox 46 für einen Lastkraftwagen eine Breite von drei Metern und eine Länge von 15 Metern.

Als dynamische Zustandsvariablen werden bei dem erfindungsgemäßen Verfahren nun in diesem Beispiel die Koordinaten des Schwerpunkts der Objektbox gewählt, der für die Objektbox 46 in den Fig. 1 und 3 durch den Punkt 48 dargestellt ist. Der Schwerpunkt der Objektbox wird bei dem Verfahren auch als Position des Objekts angesehen.

Wie in den Figuren 1 und 3 gezeigt erfolgt die Zuordnung zwischen dem Segment 28 bzw. 36 und der das entsprechende Objekt darstellenden Objektbox 46 dadurch, dass die Objektbox bei gegebener fester Ausdehnung durch Translationen und Rotation um den Schwerpunkt so angeordnet wird, dass die Abstände zwischen den das Segment bildenden Bildpunkten und dem Rand der Objektbox minimiert werden.

Dadurch ergibt sich im Beispiel, da die Lage des Lastkraftwagen 16 zu dem Fahrzeug 10 im wesentlichen konstant geblieben ist, eine im wesentlichen unveränderte Position des Schwerpunktes 48 der Objektbox 46. Durch diese Darstellung des Objekts werden also große, allein durch eine nur teilweise Ansicht des Objekts verursachte Veränderung in der Lage des Schwerpunkts des Objekts sicher vermieden.

Durch diese Behandlung des Objekts ergibt sich auch eine verbesserte Lage des Suchbereichs, in dem nach Segmenten für ein Objekt gesucht wird. In Fig. 3 ist schematisch ein Suchbereich 50 für den Schwerpunkt des dem Lastkraftwagen 16 zugeordneten Objektes, d. h. der Objektbox 46, dargestellt.

Die Lage des Suchbereichs 50 ergibt sich dabei aus der prädizierten Position des Schwerpunktes der Objektbox und die Ausdehnung des Suchbereichs für den Schwerpunkt aus prädizierten Varianzen und Kovarianzen dieser Messgrößen. Der eigentliche Suchbereich für Segmente ergibt sich bei dem erfindungsgemäßen Verfahren nach dieser Ausführungsform dadurch, dass ein der Objektbox entsprechendes Rechteck mit seinem Schwerpunkt entlang des Randes des Suchbereichs 50 geführt wird und die durch das Rechteck überstrichene Fläche zusammen mit dem Suchbereich 50 für den Schwerpunkt als Suchbereich für Segmente definiert wird. Der Suchbereich 50 für den Schwerpunkt kann in einer anderen Ausführungsform der Erfindung, beispielsweise bei Wahl eines anderen Modells für den Lastkraftwagen, auch elliptisch sein.

Hierdurch ergeben sich zum einen günstigere Dimensionen des Suchbereichs, da die nur über die Unsicherheit in der prädizierten Lage des Schwerpunktes bestimmte Größe des Suchbereichs 50 gegebenenfalls zu klein wäre, wenn bei nur kleinen prädizierter Varianzen und Kovarianzen der Suchbereich für den Schwerpunkt u. U. kleiner würde als das Objekt, das verfolgt wird. Darüber hinaus ändert sich die Lage des Suchbereichs auch weniger stark, da Sprünge in der Lage des Schwerpunktes geringer sind.

Weiterhin wird auch die Zuordnung von Segmenten zu den Objekten bei sich überschneidenden Suchbereichen wesentlich vereinfacht.

Zur Erläuterung ist in Fig. 3 schematisch neben dem Suchbereich 50 für den Schwerpunkt des dem Lastkraftwagen 16 zugeordneten Objekts, das heißt der Objektbox 46, der Suchbereich 52 für das Zweirad 18, das heißt des Schwerpunktes der diesem entsprechenden Objektbox 54, dargestellt. Wie leicht zu erkennen ist, befindet sich das Zweirad 18 bzw. das aus den Bildpunkten 34 gebildete Segment 55 im Suchbereich 50 des dem Lastkraftwagen 16 zugeordneten Objektes.

Durch die vorgegebene Ausdehnung, d. h. Form und Größe der Objektbox 46 und die Bestimmung der Lage durch Minimierung der Abstände der dem Objekt zuzuordnenden, innerhalb der Objektbox 46 liegenden Segment-Bildpunkte zu dem Rand der Objektbox, ist eine Zuordnung des Segments 55 zu dem den Lastkraftwagen 16 darstellenden Objekt nicht gegeben, da hierdurch der auf die Anzahl der verwendeten Bildpunkte bezogene mittlere Abstand der Bildpunkte von dem Rand der Objektbox nicht minimiert würde. Dieser Abstand kann als Gütekennzahl dem Objekt zugeordnet und als Objekteigenschaft mit den Objektdaten in Schritt S22 ausgegeben werden, so dass die Qualität der Zuordnung von folgenden Applikationen einschätzbar ist.

Weiterhin wird der Abstand dazu verwendet, eine Zuordnung eines Segments zu einem Objekt nur zuzulassen, wenn ein gewisser Schwellwert unterschritten wird. So wird beispielsweise bei einem PKW, dessen Umriss in sehr guter Näherung einem Rechteck entspricht, gefordert, dass der mittlere quadratische Abstand der Bildpunkte eines Segments von dem Rand der Objektbox einen gewissen Maximalwert nicht überschreiten darf. Dies ermöglicht beispielsweise die Unterscheidung von einem großen, ähnlich geformten, diffusen Objekt wie zum Beispiel einem Baum, bei dem die Bildpunkte typischerweise nicht entlang einer Linie sondern eher haufenartig angeordnet sind.

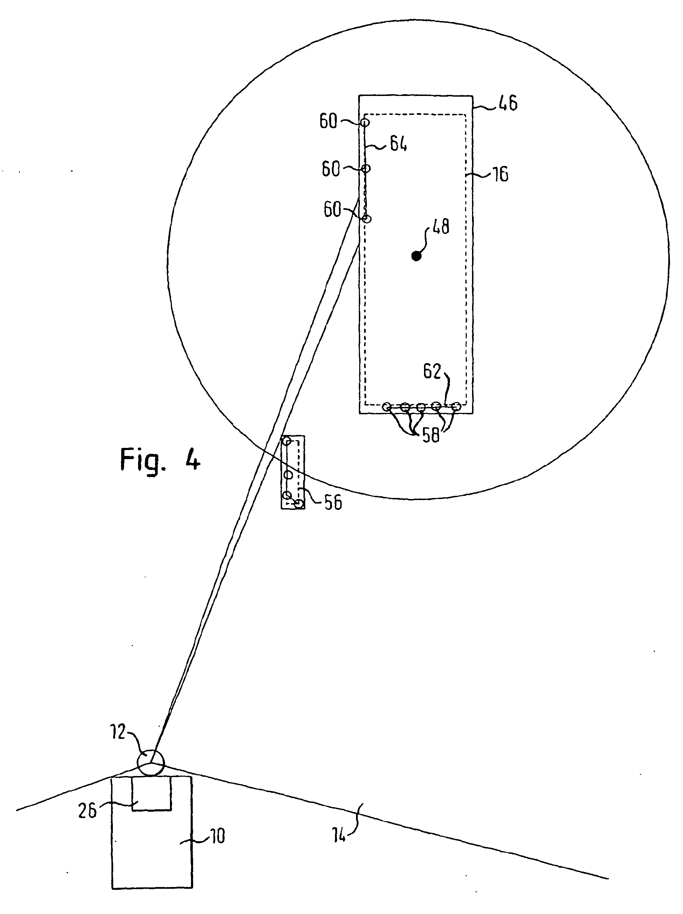

Weiterhin ist eine Zuordnung von Segmenten möglich, die dadurch entstehenden, dass Teile des Objekts verdeckt werden (sog. Objektzerfall). Zur Erläuterung sind in Fig. 4 wiederum das Fahrzeug 10 und der Lastkraftwagen 16 dargestellt, wobei nun ein weiteres Zweirad 56 einen Teil des Lastkraftwagens 16 verdeckt. Von dem Lastkraftwagen 16 werden nun die Bildpunkte 58 und 60 erfasst, die bei der Segmentierung in Schritt S 12 zu zwei verschiedenen Segmenten 62 und 64 zusamrnengefasst werden. Indem die Objektbox 46 so angeordnet wird, dass der mittlere Abstand der Bildpunkte von Segmenten, die im Suchbereich und vollständig in einer Objektbox liegen, von dem Rand der Objektbox 46 minimal ist, erfolgt, da die Ausdehnung der Objektbox nicht variiert wird, zwanglos eine Zuordnung der Segmente 62 und 64 zu dem den Lastkraftwagen 16 darstellenden Objekt.

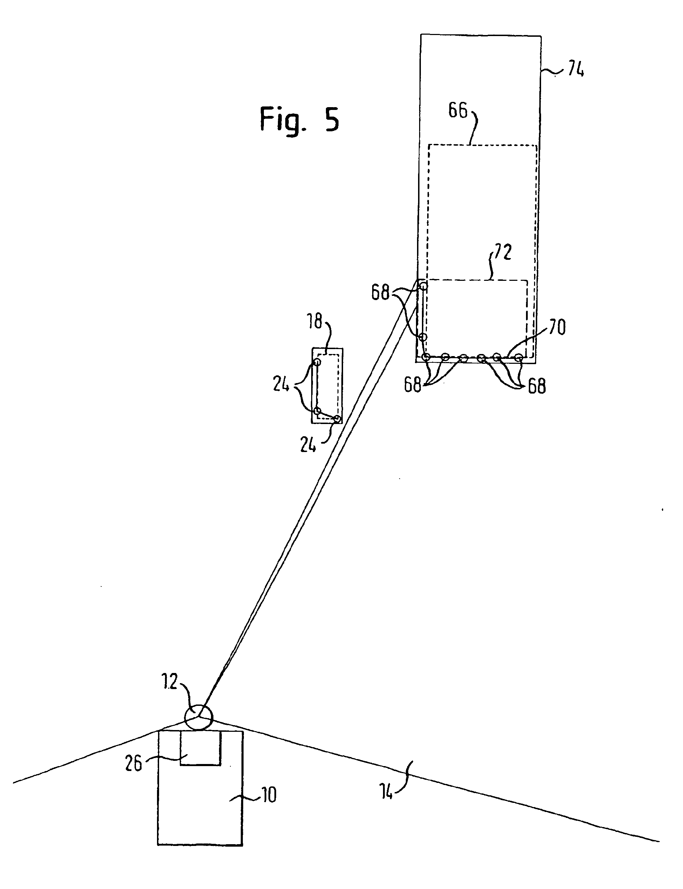

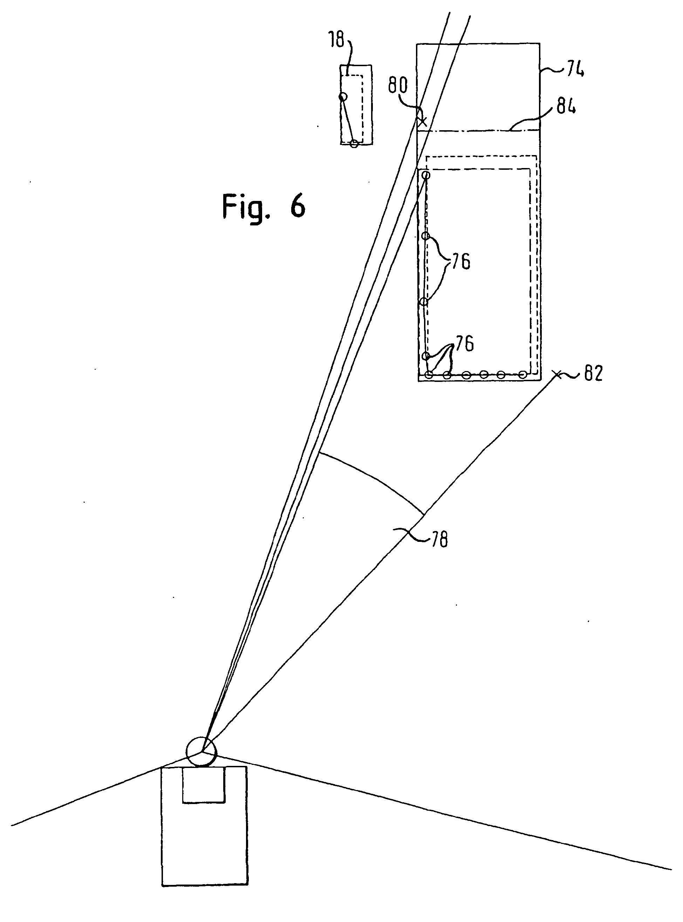

Es ist jedoch möglich, dass die Größe der Objektbox nach einer Zuordnung bei oder nach der Objektbildung, deutlich größer ist, als der Gegenstand, dessen Ausdehnung durch die Objektbox dargestellt werden soll. Gegebenenfalls kann dann im Laufe des Verfahrens die Größe der Objektbox adaptiert werden. Dies ist in den Figuren 5 und 6 dargestellt.

In Fig. 5 ist als einziger Unterschied zu der Szene in Fig. 1 der Lastkraftwagen 16 durch einen kleineren Lastkraftwagen 66, angedeutet durch das Rechteck mit eng gepunkteten Seiten, ersetzt.

Zunächst wird die Zuordnung einer Objektklasse und damit Objektbox zu dem den Lastkraftwagen 66 darstellenden Objekt dargestellt.

Aus den Bildpunkten 68 wurde in Schritt S12 das Segment 70 gebildet, das in den Schritten S 14 und S16 keinem Objekt zugeordnet werden konnte.

In Schritt S20 wird daraufhin aus dem Segment 70 ein neues Objekt gebildet. Dazu werden die Länge und Breite eines begrenzenden Rechtecks 72 bestimmt, das das Segment 70 am engsten umschließt. Diese Breite und Länge wird dann mit denen zur Definition der Objektklassen vorgegebenen Wertebereichen verglichen. Auf Grund der festgestellten Breite und Länge des Rechtecks 72 wird dem dem Lastkraftwagen 66 entsprechenden Objekt die Objektklasse für Lastkraftwagen und damit die objektklassenspezifische Objektbox 74 zugewiesenen, deren Ausdehnung durch die beiden statischen Zustandsparameter Objektbox-Länge und Objektbox-Breite parametrisiert ist. Bei der ersten Zuweisung werden sowohl für die Objektbox-Länge als auch die Objektbox-Breite die maximalen Werte, die gemäß der Definition der Objektklasse zulässig sind, eingesetzt, hier also als Länge 15 m und als Breite 3 m. Die resultierende Objektbox 74 ist damit wesentlich länger als der Lastkraftwagen 66. Wie allgemein in dem hier beschriebenen Verfahren werden als dynamische Zustandsvariablen des Lastkraftwagens 66 die Koordinaten des Schwerpunktes der Objektbox 74 verwendet.

Bei der Szene in Fig. 6 ist der Lastkraftwagen 66 nicht länger durch das Zweirad 18 verdeckt, so dass die erfassten Bildpunkte 76, die Gegenstandspunkten auf dem Lastkraftwagen 66 entsprechen, einen zusammenhängenden Winkelbereich 78 in Bezug auf den Laserscanner 12 abdecken.

Dadurch, dass bei den links und rechts zu dem Winkelbereich 78 liegenden Erfassungswinkeln, angedeutet durch die Kreuze 80 und 82, keine benachbarten Bildpunkte festgestellt werden können, kann auch eine Verdeckung des Objekts bzw. des Lastkraftwagens 66 an den Enden der sichtbaren Kontur ausgeschlossen werden.

Daher kann davon ausgegangen werden, dass in diesem Fall die Länge der Objektbox nicht der tatsächlichen Länge des Lastkraftwagens 66 entspricht und daher adaptiert werden kann. Um die Objektbox nicht zu klein zu wählen, wird zur Adaption daher die Länge der neuen, adaptierten Objektbox 84 so gewählt, dass ein theoretisch auf dem Rand der ursprünglichen Objektbox 74 liegender Bildpunkt bei dem gegen den Uhrzeigersinn zu dem Winkelbereich 78 benachbarten Winkel, angedeutet durch das Kreuz 80, gerade nicht mehr in der Objektbox läge. Dadurch wird dem begrenzten Auflösungsvermögen des Laserscanners 12 bei der gegebenen Entfernung und dem gegebenen Winkel Rechnung getragen.

Diese Adaption erfolgt bei dem erfindungsgemäßen Verfahren am Ende des Schrittes S16. Dabei wird zunächst überprüft, ob die erfasste Kontur der Objektbox 74 an ihren Enden von einem anderen Gegenstand, beispielsweise dem Zweirad 18, verdeckt sein könnte. Dies könnte der Fall sein, wenn zu den an den Enden der erfassten Kontur gelegenen Bildpunkten benachbarte Bildpunkte einen geringeren Abstand zu dem Sensor bzw. Laserscanner 12 haben.

Ist dies der Fall, wird eine Verdeckung an den Enden nicht ausgeschlossen und eine Adaption findet nicht statt.

Wird jedoch keine Verdeckung erkannt, wird die Objektbox durch Wahl wenigstens eines die Objektbox parametrisierenden statischen Zustandsparameters, beispielsweise der Breite und/oder Länge, so adaptiert, dass wenigstens alle Bildpunkte der dem Objekt zugeordneten Segmente in der neuen Objektbox liegen müssen, diese aber mit einer vorgegebenen maximalen Toleranz eng umschlossen werden.

Bevorzugt werden die statischen Zustandsparameter bei dem jeweiligen Winkel und dem jeweiligen Abstand entsprechend dem Auflösungsvermögen des Laserscanners 12 größer gewählt, wie oben geschildert.

Eine so optimal an die tatsächliche Ausdehnung eines Gegenstands angepasste Objektbox ermöglicht eine besonders zuverlässige Zuordnung von Segmenten zu Objekten.

### Bezugszeichenliste

- 10: Fahrzeug
- 12: Laserscanner
- 14: Sichtbereich
- 16: Lastkraftwagen
- 18: Zweirad
- 20: Strahlungsbündel
- 22: Bildpunkte
- 24: Bildpunkte
- 26: Datenverarbeitungseinrichtung
- 28: Segment
- 30: Segment
- 32: Bildpunkte
- 34: Bildpunkte
- 36: Segment
- 38: begrenzendes Rechteck
- 40: begrenzendes Rechteck
- 42: Schwerpunkt des Rechtecks 38
- 44: Schwerpunkt des Rechtecks 40
- 46: Objektbox
- 48: Schwerpunkt der Objektbox
- 50: Suchbereich
- 52: Suchbereich
- 53: Segment
- 54: Objektbox
- 55: Segment
- 56: Zweirad
- 58: Bildpunkte
- 60: Bildpunkte

- 62: Segment
- 64: Segment
- 66: Lastkraftwagen
- 68: Bildpunkte
- 70: Segment
- 72: begrenzendes Rechteck
- 74: Objektbox
- 76: Bildpunkte
- 78: Winkelbereich
- 80: nicht vorhandener Bildpunkt
- 82: nicht vorhandener Bildpunkt
- 84: adaptierte Objektbox

## Patentansprüche

1. Verfahren zur Erkennung und Verfolgung von Objekten auf der Basis von von wenigstens einem Sensor zur Erfassung, insbesondere einem Laserscanner (12), erfassten, tiefenaufgelösten, Bildpunkte (22, 24, 32, 34, 68, 74) enthaltenden Bildern von Gegenständen (16, 18, 66) in einem Sichtbereich (14) des Sensors,
bei dem die Erkennung und Verfolgung unter Verwendung von den Objekten zugeordneten Modellen für die zeitliche Entwicklung von dynamischen Zustandsvariablen erfolgt, die jeweils einen zeitlich veränderlichen Zustand des Objekts beschreiben und dynamische Zustandsvariablen zur Bestimmung der Position des jeweiligen Objekts umfassen, und
bei dem bei der Erkennung von Objekten eine Zuordnung von Bildpunkten (22, 24, 32, 34, 68, 74) eines aktuellen Bildes zu wenigstens einem Objekt erfolgt,
**dadurch gekennzeichnet,**
**dass** wenigstens einem Objekt als statische Eigenschaft eine Objektbox (46, 54, 84) zugeordnet wird, die eine Ausdehnung des Objekts in der Bildebene darstellt, eine bestimmte Form und Größe aufweist, und hinsichtlich Form und Größe dem durch das Objekt dargestellten Gegenstand (16, 18, 66) entspricht, und
**dass** die dynamischen Zustandsvariablen zur Bestimmung der Position des Objekts die Koordinaten eines Bezugspunkts der Objektbox (46, 54, 84) umfassen, über den die Position der Objektbox (46, 54, 84) und damit des Objekts bestimmbar ist.

2. Verfahren nach Anspruch 1,
**dadurch gekennzeichnet,**
**dass** der Objektbox (46, 54, 84) eine Achse zugeordnet ist, und
**dass** die dynamischen Zustandsvariablen eine Orientierungsvariable umfassen, über die die Orientierung der Achse und damit der Objektbox (46, 54, 84) zu einer vorgegebenen Referenzachse bestimmbar ist.

3. Verfahren nach Anspruch 1 oder 2,
**dadurch gekennzeichnet,**
**dass** zur Erkennung von Objekten für mindestens ein Objekt in Abhängigkeit von den prädizierten Werten der die Objektposition bestimmenden Zustandsvariablen ein Suchbereich (50, 52) in dem aktuellen Bild definiert wird, in dem nach dem Objekt zuzuordnenden Bildpunkten (22, 24, 32, 34, 68, 74) gesucht wird und dessen Form und Größe von wenigstens einer Eigenschaft der Objektbox (46, 54, 84) abhängt.

4. Verfahren nach einem der vorhergehenden Ansprüche,
**dadurch gekennzeichnet,**
**dass** zur Erkennung von Objekten aus den Bildpunkten (22, 24, 32, 34, 68, 74) des aktuellen Bildes Segmente (28, 30, 36, 62, 64, 70) gebildet werden, die jeweils einen einzelnen Bildpunkt oder eine Menge aller Bildpunkte (22, 24, 32, 34, 68, 74) umfassen, von denen jeweils mindestens zwei entsprechend wenigstens einem Segmentierungskriterium als dem Segment zugehörig definiert werden, und die untereinander keine gemeinsamen Bildpunkte aufweisen, dass für mindestens ein Objekt in Abhängigkeit von den prädizierten Werten der die Objektposition bestimmenden Zustandsvariablen ein Suchbereich (50, 52) in dem aktuellen Bild definiert wird, in dem zur Zuordnung nach Bildpunkten (22, 24, 32, 34, 68, 74) für das Objekt gesucht wird, und
**dass** bei der Zuordnung die Position und/oder Orientierung der Objektbox (46, 54, 84) so bestimmt wird, dass wenigstens ein Segment (28, 30, 36, 62, 64, 70), das in dem Suchbereich (50, 52) liegt, auch in der Objektbox (46, 54, 84) liegt.

5. Verfahren nach Anspruch 4,
**dadurch gekennzeichnet,**
**dass** die Position und/oder Orientierung der Objektbox (46, 54, 84) so bestimmt wird, dass ein jeweils dem Objekt zuzuordnendes Segment (28, 30, 36, 62, 64, 70) entlang wenigstens eines Teils des Randes der Objektbox (46, 54, 84) angeordnet ist.

6. Verfahren nach einem der vorhergehenden Ansprüche,
**dadurch gekennzeichnet,**
**dass** Objekten zuzuordnende Objektklassen definiert werden, für die jeweils eine Objektbox (46, 54, 84) mit einer objektklassenspezifischen Form und Größe definiert ist, und
**dass** mindestens einem Objekt bei oder nach seiner Bildung eine Objektklasse und eine Objektbox (46, 54, 84) entsprechend der objektklassenspezifischen Form und Größe zugeordnet wird.

7. Verfahren nach einem der Ansprüche 1 bis 6,
**dadurch gekennzeichnet,**
**dass** Objekten zuzuordnende Objektklassen definiert werden, die Gegenständen (16, 18, 66) mit bestimmten Formen und Größen entsprechen,
**dass** Form und/oder Größe der Objektbox (46, 54, 84) wenigstens durch mindestens einen statischen Zustandsparameter entsprechend den Formen und Größen der den Objektklassen entsprechenden Gegenstände parametrisierbar ist, und dass mindestens einem Objekt bei oder nach seiner Bildung eine Objektklasse und eine Objektbox (46, 54, 84) entsprechend der objektklassenspezifischen Form und eines vorgegebenen Anfangswertes des statischen Zustandsparameters zugeordnet wird.

8. Verfahren nach Anspruch 6 oder 7,
**dadurch gekennzeichnet,**
**dass** vor der Objektbildung Segmente (28, 30, 36, 62, 64, 70) gebildet werden, die jeweils einen einzelnen Bildpunkt oder eine Menge aller Bildpunkte (22, 24, 32, 34, 68, 74) umfassen, von denen jeweils mindestens zwei entsprechend wenigstens einem Segmentierungskriterium als dem Segment zugehörig definiert werden, und die untereinander keine gemeinsamen Bildpunkte aufweisen,
**dass** ein Objekt auf der Basis wenigstens eines Segments (28, 30, 36, 62, 64, 70) erstellt wird, und
**dass** dem Objekt eine Objektklasse und eine der Objektklasse entsprechende Objektbox (46, 54, 84) zugeordnet wird, die das Segment (28, 30, 36, 62, 64, 70) vollständig aufnimmt.

9. Verfahren nach Anspruch 7 oder 8,
**dadurch gekennzeichnet,**
**dass** als Anfangswert des statischen Zustandsparameters oder mehrerer, die Objektbox (46, 54, 84) parametrisierender statischer Zustandsparameter ein Wert aus dem zulässigen Bereich bzw. Werte aus entsprechenden zulässigen Bereichen gewählt werden, für den bzw. die die Ausdehnung der Objektbox (46, 54, 84) maximal ist.

10. Verfahren nach Anspruch 7 oder 8,
**dadurch gekennzeichnet,**
**dass** für jede Objektklasse ein Anfangswert für einen die Objektbox (46, 54, 84) parametrisierenden statischen Zustandsparameter vorgegeben ist, und
**dass** der Anfangswert als Wert des Zustandsparameters für ein neu erstelltes Objekt verwendet wird, wenn das Segment (28, 30, 36, 62, 64, 70) kleiner als die durch den Anfangswert bestimmte Objektbox (46, 54, 84) ist, und
**dass** der Wert eines die Objektbox (46, 54, 84) parametrisierenden Zustandsparameters für das neu erstellte Objekt sonst so bestimmt wird, dass das Segment (28, 30, 36, 62, 64, 70) von der Objektbox (46, 54, 84) möglichst eng umfasst wird.

11. Verfahren nach einem der vorhergehenden Ansprüche,
**dadurch gekennzeichnet,**
**dass** Form und/oder Größe der Objektbox (46, 54, 84) wenigstens durch mindestens einen statischen Zustandsparameter parametrisierbar ist,
**dass** aus den Bildpunkten (22, 24, 32, 34, 68, 74) des Bildes Segmente (28, 30, 36, 62, 64, 70) gebildet werden, die jeweils einen einzelnen Bildpunkt oder eine Menge aller Bildpunkte (22, 24, 32, 34, 68, 74) umfassen, von denen jeweils mindestens zwei entsprechend wenigstens einem Segmentierungskriterium als dem Segment zugehörig definiert werden, und die untereinander keine gemeinsamen Bildpunkte aufweisen,
**dass** nach einer Zuordnung von Segmenten (28, 30, 36, 62, 64, 70) zu Objekten überprüft wird, ob die Ausdehnung des Gegenstands (16, 18, 66) von der entsprechenden Ausdehnung der Objektbox (46, 54, 84) abweicht, und
**dass** bei Erkennung einer Abweichung der aus wenigstens einem Segment (28, 30, 36, 62, 64, 70) ermittelten Ausdehnung des Objekts von der Ausdehnung der Objektbox (46, 54, 84) die Objektbox (46, 54, 84) durch Änderung des Wertes des Zustandsparameters adaptiert wird.

12. Verfahren nach Anspruch 11,
**dadurch gekennzeichnet,**
**dass** bei dem Auftreten eines Segments (28, 30, 36, 62, 64, 70), das auch nach beliebigen Translationen und/oder Drehungen der Objektbox (46, 54, 84) nur teilweise in der Objektbox (46, 54, 84) liegt, ein die Objektbox (46, 54, 84) parametrisierender statischer Zustandsparameter so adaptiert wird, dass das Segment (28, 30, 36, 62, 64, 70) vollständig in der adaptierten Objektbox (46, 54, 84) liegt,
wobei vorzugsweise die Zuordnung nur erfolgt, wenn die Objektbox (46, 54, 84) für das Objekt wenigstens einer vorgegebenen Konsistenzbedingung genügt.

13. Verfahren nach einem der Ansprüche 10 bis 13,
**dadurch gekennzeichnet,**
**dass** Objekten zuzuordnende Objektklassen definiert werden, für die jeweils eine Objektbox (46, 54, 84) mit einer objektklassenspezifischen Form und ein Bereich zulässiger Werte für wenigstens einen die Objektbox (46, 54, 84) parametrisierenden statischen Zustandsparameter definiert sind, und
**dass** für wenigstens eine Objektklasse wenigstens eine Konsistenzbedingung in Bezug auf einen die Ausdehnung der Objektbox (46, 54, 84) parametrisierenden statischen Zustandsparameter vorgesehen ist.

14. Verfahren nach einem der vorhergehenden Ansprüche,
**dadurch gekennzeichnet,**
**dass** die Form der Objektbox (46, 54, 84) ein Rechteck ist.

15. Verfahren nach einem der vorhergehenden Ansprüche,
**dadurch gekennzeichnet,**
**dass** zur Erkennung von Objekten Segmente (28, 30, 36, 62, 64, 70) gebildet werden, die jeweils einen einzelnen Bildpunkt oder eine Menge aller Bildpunkte (22, 24, 32, 34, 68, 74) umfassen, von denen jeweils mindestens zwei entsprechend wenigstens einem Segmentierungskriterium als dem Segment zugehörig definiert werden, und die untereinander keine gemeinsamen Bildpunkte aufweisen, und
**dass** einer Segment-Objekt-Zuordnung für wenigstens ein Objekt bei der Erkennung eine Güte zugeordnet wird, die in Abhängigkeit von der maximal möglichen Anzahl von Bildpunkten (22, 24, 32, 34, 68, 74) in der Objektbox (46, 54, 84) und der Anzahl der tatsächlich in der Objektbox (46, 54, 84) gefundenen Bildpunkte (22, 24, 32, 34, 68, 74) bestimmt wird.

16. Verfahren nach Anspruch 15,
**dadurch gekennzeichnet,**
**dass** vor der Ermittlung der Güte eine Verdeckungserkennung durchgeführt wird, bei der ermittelt wird, ob ein Teil des Objekts aus der Sichtrichtung des Sensors durch ein anderes Objekt verdeckt wird, und
**dass** bei Erkennen einer Verdeckung die durch die Verdeckung fehlenden Bildpunkte (22, 24, 32, 34, 68, 74) bei der Berechnung der Güte berücksichtigt werden.

17. Verfahren nach einem der vorhergehenden Ansprüche,
**dadurch gekennzeichnet,**
**dass** zur Erkennung von Objekten Segmente (28, 30, 36, 62, 64, 70) gebildet werden, die jeweils einen einzelnen Bildpunkt oder eine Menge aller Bildpunkte (22, 24, 32, 34, 68, 74) umfassen, von denen jeweils mindestens zwei entsprechend wenigstens einem Segmentierungskriterium als dem Segment zugehörig definiert werden, und die untereinander keine gemeinsamen Bildpunkte aufweisen, und
**dass** einer Segment-Objekt-Zuordnung für wenigstens ein Objekt bei einem Erkennungsschritt eine Güte zugeordnet wird, die in Abhängigkeit von den minimalen Abständen zwischen in der Objektbox (46, 54, 84) liegenden Bildpunkten (22, 24, 32, 34, 68, 74) und dem Rand der Objektbox (46, 54, 84) und von der Anzahl der in der Objektbox (46, 54, 84) liegenden Punkte bestimmt wird.

18. Verfahren nach einem der Ansprüche 15 bis 17,
**dadurch gekennzeichnet,**
**dass** dem Objekt als Eigenschaft eine Objektgüte zugeordnet wird, die in Abhängigkeit von der Güte wenigstens der letzten Segment-Objekt-Zuordnung bestimmt wird.

19. Computerprogramm mit Programmcode-Mitteln, um das Verfahren nach einem der Ansprüche 1 bis 18 durchzuführen, wenn das Programm auf einem Computer ausgeführt wird.

20. Computerprogrammprodukt mit Programmcode-Mitteln, die auf einem computerlesbaren Datenträger gespeichert sind, um das Verfahren nach einem der Ansprüche 1 bis 18 durchzuführen, wenn das Computerprogrammprodukt auf einem Computer ausgeführt wird.

21. Vorrichtung zur Erkennung und Verfolgung von Objekten mit mindestens einem zur Erfassung tiefenaufgelöster, Bildpunkte (22, 24, 32, 34, 68, 74) enthaltender Bilder von Gegenständen (16, 18, 66) in einem Überwachungsbereich (14) ausgebildeten Sensor für elektromagnetische Strahlung, insbesondere einem Laserscanner (12), und mit einer Datenverarbeitungseinrichtung (26), wobei die Erkennung und Verfolgung unter Verwendung von den Objekten zugeordneten Modellen für die zeitliche Entwicklung von dynamischen Zustandsvariablen erfolgt, die jeweils einen zeitlich veränderlichen Zustand des Objekts beschreiben und dynamische Zustandsvariablen zur Bestimmung der Position des jeweiligen Objekts umfassen, und wobei bei der Erkennung von Objekten eine Zuordnung von Bildpunkten (22, 24, 32, 34, 68, 74) eines aktuellen Bildes zu wenigstens einem Objekt erfolgt,
**dadurch gekennzeichnet,**
**dass** Mittel zur Zuordnung einer Objektbox (46, 54, 84) als statische Eigenschaft zu wenigstens einem Objekt vorgesehen sind, wobei die Objektbox (46, 54, 84) eine Ausdehnung des Objekts in der Bildebene darstellt, eine bestimmte Form und Größe aufweist, und hinsichtlich Form und Größe dem durch das Objekt dargestellten Gegenstand (16, 18, 66) entspricht, und wobei die dynamischen Zustandsvariablen zur Bestimmung der Position des Objekts die Koordinaten eines Bezugspunkts der Objektbox (46, 54, 84) umfassen, über den die Position der Objektbox (46, 54, 84) und damit des Objekts bestimmbar ist.

## Claims

1. A method for the recognition and tracking of objects on the basis of, depth-resolved images of real objects (16, 18, 66) containing picture elements (22, 24, 32, 34, 68, 74) detected by at least one sensor for detection, in particular by a laser scanner (12), in a field of view (14) of the sensor,
wherein the recognition and tracking takes place using models associated with the objects for the time development of dynamic state variables which each describe a time-changing state of the object and include dynamic state variables for the determination of the position of the respective object; and
wherein an association of picture elements (22, 24, 32, 34, 68, 74) of an actual image to at least one object takes place on the recognition of objects,
**characterised in that**
an object box (46, 54, 84) is associated with at least one object as a static property, the object box representing an extension of the object in the image plane, having a specific shape and size and corresponding to the real object (16, 18, 66) represented by the object with respect to shape and size; and
**in that** the dynamic state variables for the determination of the position of the object include the coordinates of a reference point of the object box (46, 54, 84) via which the position of the object box (46, 54, 84), and thus of the object, can be determined.

2. A method in accordance with claim 1, **characterised in that** an axis is associated with the object box (46, 54, 84); and **in that** the dynamic state variables include an orientation variable via which the orientation of the axis, and thus of the object box (46, 54, 84) to a predetermined reference axis can be determined.

3. A method in accordance with claim 1 or claim 2, **characterised in that**, for the recognition of objects, a search region (50, 52) is defined in the actual image for at least one object in dependence on the predicted values of the state variables determining the object position in which a search is made for picture elements (22, 24, 32, 34, 68, 74) to be associated with the object and whose shape and size depend on at least one property of the object box (46, 54, 84).

4. A method in accordance with any one of the preceding claims, **characterised in that**, for the recognition of objects, segments (28, 30, 36, 62, 64, 70) are formed from the picture elements (22, 24, 32, 34, 68, 74) of the current image which each include an individual picture element or a set of all picture elements (22, 24, 32, 34, 68, 74) of which in each case at least two corresponding to at least one segmentation criterion are defined as belonging to the segment and which do not have any common picture elements among one another; **in that** a search region (50, 52) is defined in the current image for at least one object in dependence on the predicted values of the state variables determining the object position in which a search is made for picture elements (22, 24, 32, 34, 68, 74) for the object for the association; and **in that**, in the association, the position and/or orientation of the object box (46, 54, 84 is determined such that at least one segment (28, 30, 36, 62, 64, 70) which lies in the search region (50, 52) also lies in the object box (46, 54, 84).

5. A method in accordance with claim 4, **characterised in that** the position and/or orientation of the object box (46, 54, 84) is/are determined such that a respective segment (28, 30, 36, 62, 64, 70) to be associated with an object is arranged along at least one part of the edge of the object box (46, 54, 84).

6. A method in accordance with any one of the preceding claims, **characterised in that** object classes to be associated with objects are defined for which a respective object box (46, 54, 84) is defined with a shape and size specific to an object class; and **in that** an object class and an object box (46, 54, 84) corresponding to the shape and size specific to the object class are associated with at least one object on or after its formation.

7. A method in accordance with any one of the claims 1 to 6, **characterised in that** object classes to be associated with objects are defined which correspond to real objects (16, 18, 66) with specific shapes and sizes; **in that** the shape and/or size of the object box (46, 54, 84) can be parameterised at least by at least one static state parameter corresponding to the shapes and sizes of the real objects corresponding to the object classes; and **in that** an object class and an object box (46, 54, 84) corresponding to the shape specific to the object class and to a predetermined starting value of the static state parameter are associated with at least one object on or after its formation.

8. A method in accordance with claim 6 or claim 7, **characterised in that**, before the formation of objects, segments (28, 30, 36, 62, 64, 70) are formed which each include an individual picture element or a set of all picture elements (22, 24, 32, 34, 68, 74) of which in each case at least two corresponding to at least one segmentation criterion are defined as belonging to the segment and which do not have any common picture elements among one another; **in that** an object is prepared on the basis of at least one segment (28, 30, 36, 62, 64, 70); and **in that** an object class and an object box (46, 54, 84) corresponding to the object class are associated with the object, the object box fully receiving the segment (28, 30, 36, 62, 64, 70).

9. A method in accordance with claim 7 or claim 8, **characterised in that** a value is selected from the permitted range or values are selected from corresponding permitted ranges for which the extension of the object box (46, 54, 84) is maximum as the starting value of the static state parameter or of a plurality of static state parameters parameterising the object box (46, 54, 84).

10. A method in accordance with claim 7 or claim 8, **characterised in that** a starting value for a static state parameter parameterising the object box (46, 54, 84) is predetermined for each object class; and **in that** the starting value is used as the value of the state parameter for a newly created object when the segment (28, 30, 36, 62, 64, 70) is smaller than the object box (46, 54, 84) determined by the starting value; and **in that** the value of a state parameter parameterising the object box (46, 54, 84) for the newly created object is otherwise determined such that the segment (28, 30, 36, 62, 64, 70) is covered as closely as possible by the object box (46, 54, 84).

11. A method in accordance with any one of the preceding claims, **characterised in that** the shape and/or size of the object box (46, 54, 84) can be parameterised at least by at least one static state parameter; **in that** segments (28, 30, 36, 62, 64, 70) are formed from the picture elements (22, 24, 32, 34, 68, 74) of the image which each include an individual picture element or a set of all picture elements (22, 24, 32, 34, 68, 74) of which in each case at least two corresponding to at least one segmentation criterion are defined as belonging to the segment and which do not have any common picture elements among one another; **in that** a check is made after an association of segments (28, 30, 36, 62, 64, 70) with objects whether the extension of the real object (16, 18, 66) deviates from the corresponding extension of the object box (46, 54, 84); and **in that**, on the recognition of a deviation of the extent of the object determined from at least one segment (28, 30, 36, 62, 64, 70) from the extent of the object box (46, 54, 84), the object box (46, 54, 84) is adapted by changing the value of the state parameter.

12. A method in accordance with claim 11, **characterised in that**, on the occurrence of a segment (28, 30, 36, 62, 64, 70), which also only partly lies in the object box (46, 54, 84) after any desired translations and/or rotations of the object box (46, 54, 84), a static state parameter parameterising the object box (46, 54, 84) is adapted such that the segment (28, 30, 36, 62, 64, 70) lies completely in the adapted object box (46, 54, 84), wherein the association preferably only takes place when the object box (46, 54, 84) for the object satisfies at least one predetermined consistency condition.

13. A method in accordance with any one of the claims 10 to 13, **characterised in that** object classes to be associated with objects are defined for which in each case an object box (46, 54, 84) having a shape specific to an object class and a range of permitted values for at least one static state parameter parameterising the object box (46, 54, 84) are defined; and **in that** at least one consistency condition is provided with respect to a static state parameter parameterising the extension of the object box (46, 54, 84) for at least one object class.

14. A method in accordance with any one of the preceding claims, **characterised in that** the shape of the object box (46, 54, 84) is a rectangle.

15. A method in accordance with any one of the preceding claims, **characterised in that**, for the recognition of objects, segments (28, 30, 36, 62, 64, 70) are formed which each include an individual picture element or a set of all picture elements (22, 24, 32, 34, 68, 74) of which in each case at least two corresponding to at least one segmentation criterion are defined as belonging to the segment and which do not have any common picture elements among one another; and **in that**, on the recognition, a quality is associated with a segment/object association for at least one object in the recognition which is determined in dependence on the maximum possible number of picture elements (22, 24, 32, 34, 68, 74) in the object box (46, 54, 84) and on the number of picture elements (22, 24, 32, 34, 68, 74) actually found in the object box (46, 54, 84).

16. A method in accordance with claim 15, **characterised in that**, before the determination of the quality, a masking recognition is carried out in which a determination is made whether a part of the object is covered by another object from the direction of view of the sensor; and **in that**, on recognition of a masking, the picture elements (22, 24, 32, 34, 68, 74) missing due to the masking are taken into account in the calculation of the quality.

17. A method in accordance with any one of the preceding claims, **characterised in that**, for the recognition of objects, segments (28, 30, 36, 62, 64, 70) are formed which each include an individual picture element or a set of all picture elements (22, 24, 32, 34, 68, 74) of which in each case at least two corresponding to at least one segmentation criterion are defined as belonging to the segment and which do not have any common picture elements among one another; and **in that** a quality is associated with a segment/ object association for at least one object in a recognition step which is determined in dependence on the minimal spacings between picture elements (22, 24, 32, 34, 68, 74) lying in the object box (46, 54, 84) and the edge of the object box (46, 54, 84) and on the number of the elements lying in the object box (46, 54, 84).

18. A method in accordance with any one of the claims 15 to 17, **characterised in that** an object quality is associated as a property with the object which is determined in dependence on the quality of at least the last segment/object association.

19. A computer program with program code means to carry out the method in accordance with any one of the claims 1 to 18, when the program is installed on a computer.

20. A computer program product with program code means which are stored on a computer legible data carrier to carry out the method in accordance with any one of the claims 1 to 18, when the computer program product is installed on a computer.

21. An apparatus for the recognition and tracking of objects having at least one sensor for electromagnetic radiation, in particular a laser scanner (12), designed for the detection of depth-resolved images of real objects (16, 18, 66) containing picture elements (22, 24, 32, 34, 68, 74) and having a data processing device (26), wherein the recognition and tracking takes place using models associated with the objects for the time development of dynamic state variables which each describe a time-changing state of the object and include dynamic state variables for the determination of the position of the respective object; and wherein an association of picture elements (22, 24, 32, 34, 68, 74) of an actual image to at least one object takes place on the recognition of objects,
**characterised in that**
means are provided for the association of an object box (46, 54, 84) with at least one object as a static property, wherein the object box (46, 54, 84) represents an extension of the object in the image plane, has a specific shape and size and corresponds to the real object (16, 18, 66) represented by the object with respect to shape and size, and wherein the dynamic state variables for the determination of the position of the object include the coordinates of a reference point of the object box (46, 54, 84) via which the position of the object box (46, 54, 84), and thus of the object, can be determined.

## Revendications

1. Procédé de reconnaissance et de suivi d'objets à base d'images de sujets (16, 18, 66) à résolution en profondeur, contenant des pixels (22, 24, 32, 34, 68, 74) et saisies par au moins un détecteur destiné à la détection, en particulier par un scanneur à laser (12), dans une zone de vision (14) du détecteur,
dans lequel la reconnaissance et le suivi s'effectuent en utilisant des modèles, associés aux objets, pour le développement temporel de variables d'état dynamiques, qui décrivent chacun un état modifié dans le temps de l'objet et qui incluent des variables d'état dynamiques pour déterminer la position de l'objet respectif, et
dans lequel, lors de la reconnaissance d'objets, il se produit une association de pixels (22, 24, 32, 34, 68, 74) d'une image actuelle à au moins un objet,
**caractérisé en ce que**
l'on associe à au moins un objet, à titre de propriété statique, une boîte d'objet (46, 54, 84) qui représente une extension de l'objet dans le plan image, qui présente une forme et une taille déterminées et qui correspond de par sa forme et sa taille au sujet (16, 18, 66) représenté par l'objet,
et **en ce que** les variables d'état dynamiques pour la détermination de la position de l'objet comprennent les coordonnées d'un point de référence de la boîte d'objet (46, 54, 84), via lequel on peut déterminer la position de la boîte d'objet (46, 54, 84) et ainsi de l'objet.

2. Procédé selon la revendication 1,
**caractérisé en ce que**
un axe est associé à la boîte d'objet (46, 54, 84),
et **en ce que** les variables d'état dynamiques comprennent une variable d'orientation via laquelle on peut déterminer l'orientation de l'axe et ainsi de la boîte d'objet (46, 54, 84) par rapport à un axe de référence prédéterminé.

3. Procédé selon la revendication 1 ou 2,
**caractérisé en ce que**
pour la reconnaissance d'objets, on définit dans l'image actuelle pour au moins un objet une zone de recherche (50, 52) en fonction des valeurs prédites des variables d'état déterminant la position de l'objet, zone dans laquelle on cherche les pixels (22, 24, 32, 34, 68, 74) à associer à l'objet et dont la forme et la taille dépendent d'au moins une propriété de la boîte d'objet (46, 54, 84).

4. Procédé selon l'une des revendications précédentes,
**caractérisé en ce que**
pour la reconnaissance d'objets, on forme des segments (28, 30, 36, 62, 64, 70) à partir des pixels (22, 24, 43, 34, 68, 74) de l'image actuelle, lesdits segments entourant chacun un pixel individuel ou un sous-ensemble de pixels (22, 24, 32, 34, 68, 74) dont au moins deux sont définis comme appartenant au segment en correspondance d'au moins un critère de segmentation, et qui ne présentent pas de pixels communs entre eux, **en ce que** l'on définit dans l'image actuelle pour au moins un objet une zone de recherche (50, 52) en fonction des valeurs prédites des variables d'état déterminant la position de l'objet, zone dans laquelle on cherche des pixels (22, 24, 32, 34, 68, 74) pour l'objet en vue de l'association, et
**en ce que** lors de l'association, on détermine la position et/ou l'orientation de la boîte d'objet (46, 54, 84) de telle sorte qu'au moins un segment (28, 30, 36, 62, 64, 70) qui se trouve dans la zone de recherche (50, 52) se trouve également dans la boîte d'objet (46, 54, 84).

5. Procédé selon la revendication 4,
**caractérisé en ce que**
l'on détermine la position et/ou l'orientation de la boîte d'objet (46, 54, 84) de telle sorte qu'un segment respectif (28, 30, 36, 62, 70) à associer à l'objet est agencé le long d'une partie au moins du bord de la boîte d'objet (46, 54, 84).

6. Procédé selon l'une des revendications précédentes,
**caractérisé en ce que**
l'on définit des classes d'objets à associer aux objets, pour lesquelles on définit une boîte d'objet respective (46, 54, 84) avec une forme et une taille spécifiques à la classe d'objets, et
**en ce que** l'on associe à au moins un objet, pendant ou après sa formation, une classe d'objets et une boîte d'objet (46, 54, 84) en correspondance de la forme et de la taille spécifiques à la classe d'objets.

7. Procédé selon l'une des revendications 1 à 6,
**caractérisé en ce que**
l'on définit des classes d'objets à associer aux objets, qui correspondent à des sujets (16, 18, 66) de formes et de tailles déterminées,
**en ce que** la forme et/ou la taille de la boîte d'objet (46, 54, 84) est susceptible d'être paramétrée par au moins un paramètre d'état statique en correspondance des formes et des tailles des sujets correspondants aux classes d'objets,
et **en ce que** l'on associe à au moins un objet, pendant ou après sa formation, une classe d'objets et une boîte d'objet (46, 54, 84) en correspondance de la forme spécifique à la classe d'objets et d'une valeur initiale prédéterminée du paramètre d'état statique.

8. Procédé selon la revendication 6 ou 7,
**caractérisé en ce que**
avant la formation d'objet, on forme des segments (28, 30, 36, 62, 64, 70) qui entourent chacun un pixel individuel ou un sous-ensemble tous les pixels (22, 24, 32, 34, 68, 74) dont au moins deux sont définis comme appartenant au segment en correspondance d'au moins un critère de segmentation, et qui ne présentent pas de pixels communs entre eux,
**en ce que** l'on établit un objet en se basant sur au moins un segment (28, 30, 36, 62, 64, 70), et
**en ce que** l'on associe à l'objet une classe d'objets et une boîte d'objet (46, 54, 84) correspondante à la classe d'objets, boîte qui reçoit entièrement le segment (28, 30, 36, 62, 64, 70).

9. Procédé selon la revendication 7 ou 8,
**caractérisé en ce que**
l'on choisit à titre de valeur initiale du paramètre d'état statique ou de plusieurs paramètres d'état statiques paramétrant la boîte d'objet (46, 54, 84), une valeur parmi la plage admissible, ou bien des valeurs parmi les plages admissibles correspondantes, pour laquelle ou lesquelles l'extension de la boîte d'objet (46, 54, 84) est maximale.

10. Procédé selon la revendication 7 ou 8,
**caractérisé en ce que**
l'on impose pour chaque classe d'objets une valeur initiale pour un paramètre d'état statique paramétrant la boîte d'objet (46, 54, 84), et
**en ce que** l'on utilise la valeur initiale comme valeur du paramètre d'état pour un objet nouvellement établi lorsque le segment (28, 30, 36, 62, 64, 70) est plus petit que la boîte d'objet (46, 54, 84) déterminée par la valeur initiale, et
**en ce que** l'on détermine par ailleurs la valeur d'un paramètre d'état paramétrant la boîte d'objet (46, 54, 84) pour l'objet nouvellement établi de telle sorte que le segment (28, 30, 36, 62, 64, 70) est entouré le plus étroitement possible par la boîte d'objet (46, 54, 84).

11. Procédé selon l'une des revendications précédentes,
**caractérisé en ce que**
la forme et/ou la taille de la boîte d'objet (46, 54, 84) est susceptible d'être paramétrée par au moins un paramètre d'état statique,
**en ce que** l'on forme à partir des pixels (22, 24, 32, 34, 68, 74) de l'image des segments (28, 30, 36, 62, 64, 70) qui entourent un pixel individuel respectif ou un sous-ensemble de tous les pixels (22, 24, 32, 34, 68, 74) dont au moins deux sont définis comme appartenant au segment en correspondance d'au moins un critère de segmentation, et qui ne présentent pas de pixels communs entre eux,
**en ce qu'**après une association de segments (28, 30, 36, 62, 64, 70) aux objets, on vérifie si l'extension du sujet (16, 18, 66) diffère de l'extension correspondante de la boîte d'objet (46, 54, 84), et
**en ce que** lors de la reconnaissance d'une différence entre l'extension de l'objet détectée à partir dudit au moins un segment (28, 30, 36, 62, 64, 70) et l'extension de la boîte d'objet (46, 54, 84), on adapte la boîte d'objet (46, 54, 84) par modification de la valeur du paramètre d'état.

12. Procédé selon la revendication 11,
**caractérisé en ce que**
lors de l'apparition d'un segment (28, 30, 36, 62, 64, 70) qui ne se trouve que partiellement dans la boîte d'objet (46, 54, 84) même après des translations et/ou des rotations quelconques de la boîte d'objet (46, 54, 84), on adapte un paramètre d'état statique paramétrant la boîte d'objet (46, 54, 84) de telle sorte que le segment (28, 30, 36, 62, 64, 70) se trouve entièrement dans la boîte d'objet adaptée (46, 54, 84),
l'association ayant lieu de préférence uniquement lorsque la boîte d'objet (46, 54, 84) pour l'objet satisfait au moins une condition de consistance prédéterminée.

13. Procédé selon l'une des revendications 10 à 12,
**caractérisé en ce que**
l'on définit des classes d'objets à associer aux objets, pour lesquelles sont définies au moins une boîte d'objet (46, 54, 84) présentant une forme spécifique à la classe d'objets et une plage de valeurs admissibles pour au moins un paramètre d'état statique paramétrant la boîte d'objet (46, 54, 84), et
**en ce que** l'on prévoit pour au moins une classe d'objets au moins une condition de consistance par rapport à un paramètre d'état statique paramétrant l'extension de la boîte d'objet (46, 54, 84).

14. Procédé selon l'une des revendications précédentes,
**caractérisé en ce que**
la forme de la boîte d'objet (46, 54, 84) est un rectangle.

15. Procédé selon l'une des revendications précédentes,
**caractérisé en ce que**
pour la reconnaissance d'objets, on forme des segments (28, 30, 36, 62, 64, 70) qui entourent chacun un pixel individuel ou une sous-ensemble de tous les pixels (22, 24, 32, 34, 68, 74) dont au moins deux sont définis comme appartenant au segment en correspondance d'au moins un critère de segmentation, et qui ne présentent pas de pixels communs entre eux,
**en ce que** lors de la reconnaissance, on attribue à une association segment - objet pour au moins un objet une qualité qui est déterminée en fonction du nombre maximal possible de pixels (22, 24, 32, 34, 68, 74) dans la boîte d'objet (46, 54, 84) et du nombre des pixels (22, 24, 32, 34, 68, 74) trouvés réellement dans la boîte d'objet (46, 54, 84).

16. Procédé selon la revendication 15,
**caractérisé en ce que**
avant de déterminer la qualité, on procède à une reconnaissance de recouvrement dans laquelle on détecte si une partie de l'objet est recouverte par un autre objet dans la direction de vision du détecteur, et lors de la reconnaissance d'un recouvrement, pendant le calcul de la qualité, on prend en compte les pixels (22, 24, 32, 34, 68, 74) qui manquent à cause du recouvrement.

17. Procédé selon l'une des revendications précédentes,
**caractérisé en ce que**
pour la reconnaissance d'objets, on forme des segments (28, 30, 36, 62, 64, 70) qui entourent chacun un pixel individuel ou un sous-ensemble de tous les pixels (22, 24, 32, 34, 68, 74) dont au moins deux sont définis comme appartenant au segment en correspondance d'au moins un critère de segmentation, et qui ne présentent pas de pixels communs entre eux,
et **en ce que**
lors d'une étape de reconnaissance, on attribue à une association segment - objet pour au moins un objet une qualité qui est déterminée en fonction des distances minimales entre les pixels (22, 24, 32, 34, 68, 74) situés dans la boîte d'objet (46, 54, 84) et le bord de la boîte d'objet (46, 54, 84), et en fonction du nombre des pixels qui se trouvent dans la boîte d'objet (46, 54, 84).

18. Procédé selon l'une des revendications 15 à 17,
**caractérisé en ce que**
l'on associe à l'objet, en tant que propriété, une qualité d'objet qui est déterminée en fonction de la qualité au moins de la dernière association segment - objet.

19. Programme d'ordinateur avec des moyens de code programme, pour mettre en oeuvre le procédé selon l'une des revendications 1 à 18, lorsque le programme est exécuté sur un ordinateur.

20. Produit de programme d'ordinateur avec des moyens de code programme qui sont mémorisés sur un support de données lisible à l'ordinateur, pour mettre en oeuvre le procédé selon l'une des revendications 1 à 18, lorsque le produit de programme d'ordinateur est exécuté sur un ordinateur.

21. Dispositif de reconnaissance et de suivi d'objets, comportant au moins un détecteur, en particulier un scanneur à laser (12), destiné à un rayonnement électromagnétique et réalisé pour la saisie d'images de sujets (16, 18, 66) à résolution en profondeur, contenant des pixels (22, 24, 32, 34, 68, 74), dans une zone à surveiller (14), et comportant un dispositif de traitement de données (26), la reconnaissance et le suivi s'effectuant en utilisant des modèles, associés aux objets, pour le développement temporel de variables d'état dynamiques, qui décrivent chacun un état modifié dans le temps de l'objet et qui incluent des variables d'état dynamiques pour déterminer la position de l'objet respectif, et lors de la reconnaissance d'objets, il se produit une association de pixels (22, 24, 32, 34, 68, 74) d'une image actuelle à au moins un objet,
**caractérisé en ce que**
il est prévu des moyens pour associer à au moins un objet, à titre de propriété statique, une boîte d'objet (46, 54, 84), et la boîte d'objet (46, 54, 84) représente une extension de l'objet dans le plan image, présente une forme et une taille déterminées et correspond de par sa forme et sa taille au sujet (16, 18, 66) représenté par l'objet,
et les variables d'état dynamiques pour la détermination de la position de l'objet comprennent les coordonnées d'un point de référence de la boîte d'objet (46, 54, 84), via lequel on peut déterminer la position de la boîte d'objet (46, 54, 84) et ainsi de l'objet.
